# EUROPEAN PATENT SPECIFICATION

(11) **EP 1 266 295 B1**
(45) Date of publication and mention of the grant of the patent: **19.10.2011**
(21) Application number: 01914203.3
(22) Date of filing: 23.03.2001
(51) Int. Cl.: G06F 15/16

(54) **IMAGE PROCESSING APPARATUS AND METHOD**
BILDVERARBEITUNGSVORRICHTUNG UND -VERFAHREN
APPAREIL ET PROCEDE DE TRAITEMENT D'IMAGES

(30) Priority: 23.03.2000 JP 2000082686; 26.12.2000 JP 2000396191
(43) Date of publication of application: 18.12.2002
(73) Proprietor: Sony Computer Entertainment Inc., Tokyo 107-0052 (JP)
(72) Inventor: EBIHARA, Hitoshi SONY COMPUTER ENTERTAINMENT INC., Tokyo 107-0052 (JP); SATO, Kazumi c/o SONY COMPUTER ENTERTAINMENT INC., Tokyo 107-0052 (JP); MOKUNO, Masakazu SONY COMPUTER ENTERTAINMENT INC., Tokyo 107-0052 (JP); HARA, Hideki c/o SONY COMPUTER ENTERTAINMENT INC., Tokyo 107-0052 (JP)
(74) Representative: Manitz, Finsterwald & Partner GbR
(86) International application number: PCT/JP2001/002337
(87) International publication number: WO 2001/071519

(56) References cited:
- EP-A- 0 422 541
- EP-A- 0 627 700
- WO-A-00/01154
- US-A- 4 949 280
- US-A- 5 434 968
- US-A- 5 557 711
- US-A- 5 841 444

## Description

### BACKGROUND OF THE INVENTION

The present invention relates to an apparatus and a method for processing image data to produce an image for display on a display screen and, more particularly, to produce a high quality image for display on a relatively large display screen.

Moving pictures, such as those produced for display on "the big screen" at cinemas are usually provided by way of 35 mm film that is projected onto a relatively large screen. The use of conventional graphics processors (employing computers, microprocessors, etc.) to produce moving pictures is becoming more popular inasmuch as state of the art graphics processors are becoming more sophisticated and capable of producing quality images. As a practical matter, however, conventional graphics processors are designed to produce moving pictures on a computer display screen (such as a 17-inch monitor), a conventional television screen, etc., and not on relatively large screens, such as those found in cinemas. Indeed, conventional graphics processors are not capable of processing image data at a sufficient speed to produce moving pictures of sufficient quality, particularly when the moving pictures are to be displayed on a relatively large display screen.

The processing limitations of conventional graphics processors affects image quality in two basic ways, namely, the resolution (e.g., the total number of pixels available for each frame of image data) is insufficient for relatively large display screens, and the frame rate (e.g., the number of frames of image data produced each second) is insufficient to meet or exceed the frame rate for the 35 mm film cinematography protocol.

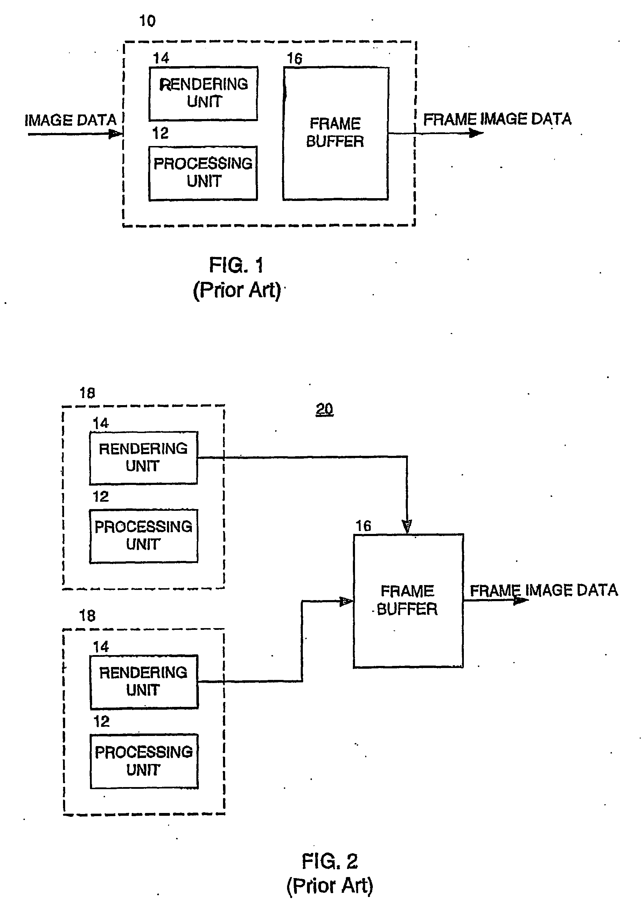

With reference to FIG. 1, a conventional graphics processor 10 may include three basic components, namely, a processing unit or software processor 12, a rendering unit 14, and a frame buffer 16. At its core, the conventional graphics processor 10 receives image data, including data concerning primitives (e.g., polygons used to model one or more objects of the image to be displayed) and produces a series of frames of image data (or pixel data), where each frame of image data contains the information necessary to display one frame of the image on the display screen. When these frames of image data are displayed at a sufficient frame rate, the appearance of movement is achieved.

The software processor 12 manipulates the image data to obtain a sequence of instructions (such as polygon instructions) for input to the rendering unit 14. The rendering unit 14 receives the sequence of instructions and produces pixel data, e.g., pixel position, color, intensity, etc. The pixel data is stored in the frame buffer 16 and an entire frame of the pixel data is referred to herein as frame image data. The frame buffer 16 is usually sized to correspond with the resolution of the display screen such that enough pixel data to cover an entire frame of the display screen may be stored. When a full frame of image data are stored in the frame buffer 16, the frame image data are released from the frame buffer 16 to be displayed on the display screen.

Among the processing bottlenecks caused by the conventional graphics processor 10 of FIG. 1 that affect processing speed is the rate at which the software processor 12 and rendering unit 14 can produce the frame image data. In order to ameliorate this bottleneck, it has been proposed to provide a graphics processor 20 having parallel software processing/rendering units 18 as illustrated in FIG. 2. The output from these parallel processing units 18 are input to a single frame buffer 16 from which the frame image data are released for display on the display screen. Although the graphics processor 20 of FIG. 2 ameliorates one of the processing bottlenecks by increasing the rate at which the image data are processed and rendered, just like peeling back the layers of an onion, an additional processing bottleneck emerge. Indeed, the rate at which the frame image data can be stored into the frame buffer 16 and released therefrom is insufficient to adequately meet the data throughput requirements for producing a high quality moving picture on a relatively large display screen.

US 5,557,711 A discloses an apparatus and a method adapted for performing volume rendering. With this known apparatus and method virtual space is divided into several parts. The divided virtual spaces are allocated to a plurality of processors so that entire image of the virtual spaces is produced. Each processor includes local buffer for storing image data therein. Also, one or more merger unit includes one or more local merger and a core merger. Image data produced in each processor is combined by the merger unit to produce one image.

US 4,949,280 A discloses an apparatus for producing image in a plurality of processors connected in parallel. Each processor is connected to frame buffer via interconnection network. The interconnection network allows processor to access frame buffer area where is accessed is other processors. Data routing between processors is achieved by a packet switch system.

Accordingly, there is a need in the art for a new apparatus and/or method for providing graphics processing that significantly increases processing speed such that high resolution moving pictures may be produced for display on a large display screen.

### SUMMARY OF THE INVENTION

The apparatus according to the present invention is defined in claim 1, and the method according to the present invention is defined in claim 32. Preferred embodiments of the apparatus and method according to the invention are defined in the dependent claims.

In accordance with at least one aspect of the present invention, an apparatus for processing imaged data to produce an image for covering an image area of a display includes a plurality of graphics processors, each graphics processor being operable to render the image data into frame image data and to store the frame image data in a respective local frame buffer; a control processor operable to provide instructions to the plurality of graphics processors; and one or more merge units operable to synchronously receive the frame image data from the respective local frame buffers and to synchronously produce combined frame image data based thereon.

The plurality of graphics processors are grouped into respective sets of graphics processors; the one or more merge units include a respective local merge unit coupled to each set of graphics processors, and a core merge unit coupled to each local merge unit; the respective local merge units are operable to synchronously receive the frame image data from the respective local frame buffers and to synchronously produce local combined frame image data based thereon; and the core merge unit is operable to synchronously receive the local combined frame image data from the respective local merge units and to synchronously produce the combined frame image data based thereon.

In accordance with at least one further aspect of the present invention, the apparatus preferably includes a video hub operable to receive at least one of a frame of the combined frame image data and at least one externally provided frame of frame image data, the video hub being operatively coupled to the plurality of graphics processors such that (i) at least one of the successive frames of frame image data from one or more of the graphics processors may include at least one of the at least one externally provided frame of frame image data and the frame of the combined frame image data, and (ii) the merge unit is operable to produce a subsequent frame of the combined frame image data based on the at least one of the at least one externally provided frame of frame image data and the frame of the combined frame image data.

Preferably, the apparatus includes a memory hub operable to receive and store common image data, the memory hub being operatively coupled to the plurality of graphics processors such that (i) at least one of the successive frames of frame image data from one or more of the graphics processors may include at least some of the common image data, and (ii) the merge unit is operable to produce a frame of the combined frame image data based on the common image data.

In accordance with at least one further aspect of the present invention, the core merge unit and the respective local merge units are operatively coupled to the control processor by way of separate control data lines such that exclusive communication between the control processor, the core merge unit, and the respective local merge units at least concerning the instruction to operate in the one or more modes is obtained.

In accordance with at least one further aspect of the present invention, an apparatus for processing image data to produce an image for display on a display screen, includes a plurality of graphics processors, each graphics processor being operable to render the image data into frame image data and to store the frame image data in a respective local frame buffer, and each graphics processor including a synchronization counter operable to produce a local synchronization count indicating when the frame image data should be released from the local frame buffer; a control processor operable to provide instructions to the plurality of graphics processors; and at least one merge unit operable to synchronously receive the frame image data from the respective local frame buffers and to synchronously produce combined frame image data based thereon.

In accordance with at least one further aspect of the present invention, the apparatus includes a data bus operatively coupled to the control processor and respective sets of the graphics processors; a respective local merge unit coupled to each set of the graphics processors and operable to synchronously receive the frame image data from the respective local frame buffers and to synchronously produce local combined frame image data based thereon; a core merge unit coupled to each local merge unit and operable to synchronously receive the local combined frame image data from the respective local merge units and to synchronously produce the combined frame image data based thereon; a control data bus operatively coupled to the core merge unit and the local merge units; a bus controller operatively coupled between the data bus and the control data bus and operable to transmit and receives data over the data bus and the control data bus on a priority basis.

Preferably, the core merge unit transmits the merge synchronization signal to the respective graphics processors by way of the bus controller and the data bus. Further, it is preferred that the control processor communicates at least the instructions concerning the one or more modes of operation to the respective local merge units unit by way of the bus controller and the control data bus.

In accordance with at least one further aspect of the present invention, the respective local frame buffers of the respective groups of graphics processors are operatively coupled to the respective local merge units by way of separate data lines such that exclusive transmission of the frame image data from the respective local frame buffers to the respective local merge units is obtained; and the respective local merge units are operatively coupled to the core merge unit by way of separate data lines such that exclusive transmission of the local combined frame image data from the respective local merge units to the core merge unit is obtained.

In accordance with at least one further aspect of the present invention, the apparatus includes a packet switch operatively coupled to the control processor and respective sets of the graphics processors; a respective local merge unit coupled to each set of the graphics processors and operable to synchronously receive the frame image data from the respective local frame buffers and to synchronously produce local combined frame image data based thereon; a core merge unit coupled to each local merge unit and operable to synchronously receive the local combined frame image data from the respective local merge units and to synchronously produce the combined frame image data based thereon; a control data bus operatively coupled to the core merge unit and the local merge units; a packet switch controller operatively coupled between the packet switch and the control data bus and operable to transmit and receive data over the packet switch and the control data bus on a priority basis.

Preferably, the control processor communicates at least the instructions concerning the one or more modes of operation to the respective local merge units and the core merge unit by way of packet switch, the packet switch controller and the control data bus. Further, it is preferred that the core merge unit transmits the merge synchronization signal to the respective graphics processors by way of the packet switch controller, and the packet switch.

In accordance with at least one further aspect of the present invention, an apparatus for processing image data to produce an image for display is formed of a subset of a plurality of processing nodes coupled together on a packet-switched network. The apparatus preferably includes: at least one accelerator node including a plurality of sets of graphics processors, each graphics processor being operable to render the image data into frame image data and to store the frame image data in a respective local frame buffer; one or more merge nodes including one or more merge units, the one or more merge units including one or more local merge units and a core merge unit, a respective one of the local merge units being associated with each set of graphics processors and being operable to synchronously receive the frame image data from the respective local frame buffers and to synchronously produce local combined frame image data based thereon, and the core merge unit being associated with each local merge unit and being operable to synchronously receive the local combined frame image data from the respective local merge units and to synchronously produce the combined frame image data based thereon; at least one configuration node operable to facilitate selecting the subset of processing nodes; a control node including a control processor operable to provide instructions to the subset of processing nodes over the packet-switched network, and operable to select the subset of processing nodes to participate in processing the image data to produce the image for display; and at least one packet switch node operable route data packets between the subset of nodes, the data packets forming at least the image data, frame image data, and combined frame image data.

In accordance with at least one further aspect of the invention, the control node is an (n)th level control node, the at least one merge node is an (n)th level merge node, the packet switch node is an (n)th level packet switch node, and at least one accelerator node is an (n)th level accelerator node that includes an (n-1)th level control node and a plurality of (n-1)th level accelerator nodes coupled together by way of an (n-1)th level packet switch node over the packet-switched network.

In accordance with at least one further aspect of the present invention, a method for processing image data to produce an image for covering an image area of a display, includes: rendering the image data into frame image data using a plurality of graphics processors; storing the frame image data in respective local frame buffers; and synchronously merging the frame image data from the respective local frame buffers to synchronously produce combined frame image data based thereon.

In accordance with at least one further aspect of the present invention, a method for processing image data to produce an image for display on a display screen, includes: rendering the image data into frame image data using a plurality of graphics processors; storing the frame image data in respective local frame buffers; producing respective local synchronization counts indicating when the frame image data should be released from the respective local frame buffers; and synchronously producing combined frame image data from the frame image data.

In accordance with at least one further aspect of the present invention, a method for processing image data to produce an image for display is carried out using a subset of a plurality of processing nodes coupled together on a packet-switched network. Preferably, the method includes: selecting from among the plurality of processing nodes at least one accelerator node including a plurality of sets of graphics processors, each graphics processor being operable to render the image data into frame image data and to store the frame image data in a respective local frame buffer; selecting from among the plurality of processing nodes one or more merge nodes including one or more merge units, the one or more merge units including one or more local merge units and a core merge unit, a respective one of the local merge units being associated with each set of graphics processors and being operable to synchronously receive the frame image data from the respective local frame buffers and to synchronously produce local combined frame image data based thereon, and the core merge unit being associated with each local merge unit and being operable to synchronously receive the local combined frame image data from the respective local merge units and to synchronously produce the combined frame image data based thereon; establishing a control node including a control processor operable to provide instructions to the subset of processing nodes over the packet-switched network, and operable to select the subset of processing nodes to participate in processing the image data to produce the image for display; and employing at least one packet switch node operable route data packets between the subset of nodes, the data packets forming at least the image data, frame image data, and combined frame image data.

Other features, aspects, and advantages of the present invention will become apparent to one skilled in the art from the disclosure herein when taken in conjunction with the accompanying drawings.

### BRIEF DESCRIPTION OF THE DRAWINGS

For the purpose of illustrating the various aspects of the invention, there are shown in the drawings forms which are presently preferred, it being understood, however, that the invention is not limited to the precise arrangements and instrumentalities shown.
FIG. 1 is a block diagram of a graphics processor in accordance with the prior art;
FIG. 2 is a block diagram of an alternative graphics processor in accordance with the prior art.
FIG. 3 is a block diagram illustrating an apparatus for processing image data in accordance with one or more aspects of the present invention;
FIG. 4 is a timing graph illustrating one or more aspects of the invention consistent with the apparatus of FIG. 3;
FIG. 5 is a timing graph illustrating one or more further aspects of the invention consistent with the apparatus of FIG. 3;
FIGS. 6A-B are timing graphs illustrating one or more still further aspects of the invention consistent with the apparatus of FIG. 3;
FIGS. 7A-7E are illustrative examples of various modes of operation consistent with one or more aspects of the present invention suitable for implementation using the apparatus for processing images data of FIG. 3;
FIG. 8 is a block diagram illustrating additional details concerning a merge unit that may be employed in the apparatuses for processing image data shown in FIG. 3;
FIG. 9 is a process flow diagram illustrating actions that may be carried out by the apparatus of FIG. 3;
FIG. 10 is a block diagram illustrating an apparatus for processing image data in accordance with one or more further aspects of the present invention;
FIG. 11 is a block diagram of a preferred graphics processor in accordance with one or more aspects of the present invention that may be employed in the apparatus of FIG. 3;
FIG. 12 is a block diagram of an apparatus for processing image data in accordance with one or more further aspects of the present invention;
FIGS. 13A-13B are timing graphs that may be employed by the apparatus of FIG. 12;
FIG. 14 is a block diagram of an apparatus for processing image data in accordance with one or more further aspects of the present invention;
FIG. 15 is a block diagram of an apparatus for processing image data in accordance with one or more further aspects of the present invention;
FIG. 16 is a block diagram of an apparatus for processing image data in accordance with one or more further aspects of the present invention;
FIG. 17 is a block diagram of an apparatus for processing image data in accordance with one or more further aspects of the present invention;
FIG. 18 is a system for processing image data in accordance with one or more further aspects of the present invention;
FIG. 19 is a process flow diagram suitable for use with the system of FIG. 18;
FIG. 20 is a block diagram of an apparatus for processing image data in accordance with one or more further aspects of the present invention; and
FIGS. 21A-21B are block diagrams of instruction formats that may be employed by the apparatus of FIG. 20.

### DETAILED DESCRIPTION OF THE INVENTION

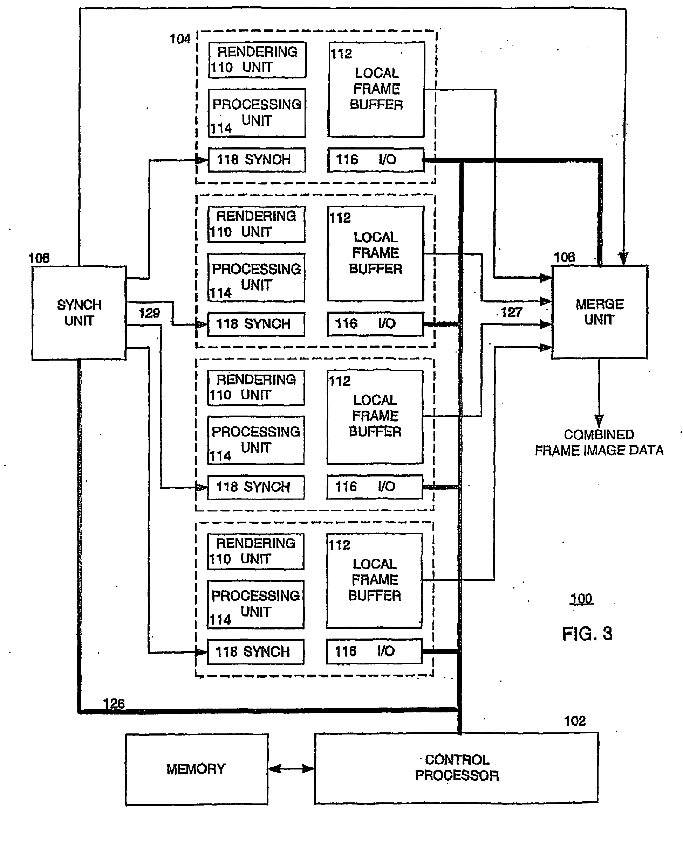

Referring to FIG. 3, there is shown a block diagram of an apparatus 100 for processing image data for producing an image for display on a display screen (not shown). It is noted that the image data may be obtained from a memory of the apparatus 100 or from a secondary memory, such as a hard-disk drive, CD-ROM, DVD-ROM, a memory associated with a communications network, etc. The image data may represent object models, such as 3D and/or 2D polygonal models of objects used in the image to be displayed. Alternatively, the image data may represent sequences of polygonal image instructions produced in accordance with a software program running on a suitable processor.

The apparatus 100 preferably includes a control processor 102 (and associated memory), a plurality of graphics processors 104, at least one merge unit 106, and a synchronization unit 108. The control processor 102 preferably communicates with the plurality of graphics processors 104, the merge unit 106, and the synchronization unit 108 by way of bus 126. In accordance with at least one aspect of the present invention, separate data lines 127 couple each of the graphics processors 104 to the merge unit 106 such that exclusive communication between the respective graphics processors 104 and the merge unit 106 is obtained. Further, separate synchronization lines 129 preferably couple the synchronization unit 108 to each of the graphics processors 104 and the merge unit 106 such that exclusive communication therebetween is obtained.

At least some, and preferably each, of the graphics processors 104 is operable to render image data into frame image data (e.g., pixel data) and to store the frame image data in a respective local frame buffer 112. More particularly, at least some of the graphics processors 104 preferably include a rendering unit 110 for performing the rendering function and a local frame buffer 112 for at least temporarily storing the frame image data. In addition, it is preferred that each graphics processor 104 include a processing unit 114 operable to facilitate performing various processes on the image data, such as polygonal spatial transformation (e.g., translation, rotation, scaling, etc.); 3D to 2D transformation (e.g., perspective view transformation, etc.); and generating sequence instructions (e.g., polygon instructions). The graphics processors 104 preferably also each include an input/output interface 116 suitable for facilitating communication over the bus 126. The graphics processors 104 may each include an optional local synchronization circuit 118, which will be discussed in more detail hereinbelow.

It is understood that the functional blocks illustrated in FIG. 3 are partitioned in a preferred fashion, although it is contemplated that the functional blocks may be partitioned in any other of a plurality of ways without departing from the spirit and scope of the invention as claimed.

The merge unit 106 is preferably operable to synchronously receive frame image data from each of the respective local frame buffers 112 and to synchronously produce combined frame image data based thereon. Preferably, the frame image data are synchronously received by the merge unit 106 in response to a merge synchronization signal produced by one of the merge unit 106 and the synchronization unit 108 and received by the graphics processors 104 over synchronization lines 129. Indeed, the plurality of graphics processors 104 preferably synchronously release the frame image data from the respective local frame buffers 112 to the merge unit 106 in response to the merge synchronization signal.

Preferably, the merge synchronization signal is synchronized in accordance with a display protocol (or standard) defining how respective frames of the combined frame image data are to be displayed. These display protocols may include the well known NTSC protocol, the HDTV protocol, the 35 mm movie protocol, the PAL protocol, etc. The display protocol defines, among other things, the frame rate at which successive frames of the combined image data are to be displayed, and a blanking period, defining when the frames of the combined frame image data are to be refreshed. For example, the blanking period may dictate how long a given frame of the combined frame image data should dwell on the display prior to refresh (as is the case with the NTSC protocol). Alternatively, the blanking period may dictate when a given frame of the combined frame image data should be removed from the display prior to refresh (as is the case with the 35 mm movie protocol).

By way of further example, when the display screen is a conventional CRT, the display protocol may be the NTSC protocol and the blanking periods may be vertical blanking periods. The NTSC protocol provides that the vertical blanking periods occur on a periodic basis consistent with when a scanning beam of the CRT is de-energized and returned to an upper left-hand portion of the display screen. When the invention is used in the NTSC context, the combined frame image data from the merge unit 106 are preferably ready for display just prior to the end of each vertical blanking period of the CRT display screen.

Although the above example relates to the use of CRT display screens, it is understood that the phrase "blanking period" may be applied in a broader sense, such as representing the blanking periods utilized in cinematography (e.g., 35 mm moving images), or other display protocols.

Advantageously, producing the combined frame image data from the merge unit 106 in synchronous fashion with the blanking period of desired display protocols permits the integration of frame image data from different display protocols and/or from different sources of the frame image data. For example, frame image data from the 35 mm film display protocol may be combined with frame image data produced by way of computer graphics. In a, broad sense, therefore, the merge synchronization signal is either derived from or sets a desired frame rate at which the combined frame image data are provided. When the combined frame image data are to be displayed on a CRT display screen, the merge synchronization signal is preferably synchronized with the vertical blanking period (or frame rate) of a CRT display screen. Alternatively, when the combined frame image data are to be merged with or utilized to produce a moving image consistent with a 35 mm film cinematography, the merge synchronization signal is preferably synchronized with the frame rate (or blanking period) consistent with that protocol.

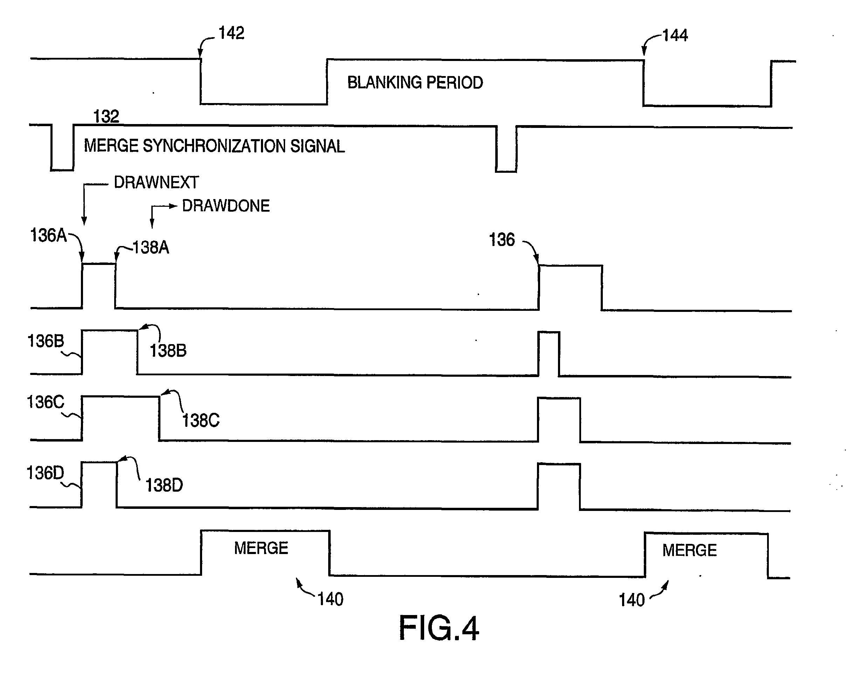

Reference is now made to FIG. 4, which is a timing diagram that illustrates the relationship between the operation of the apparatus 100 of FIG. 3 and certain aspects of a display protocol. For example the relationship between the blanking period, the merge synchronization signal, the rendering period, and the merge period is shown. As illustrated at the top timing waveform, a frame includes an interval during which an image frame is to be displayed or refreshed (indicated by a low logic state) and a period during which an image frame is to be made ready for display, e.g., the blanking period (indicated by a high logic state).

In accordance with at least one aspect of the present invention, the merge synchronization signal 132 includes transitions, such as one of rising and falling edges, that are proximate to the ends 142, 144 of the blanking periods (i.e., the transitions from high logic levels to low logic levels). For example, the merge synchronization signal 132 may include transitions that lead the ends 142, 144 of the blanking periods. Alternatively, the merge synchronization signal 132 may include transitions that are substantially coincident with the ends 142, 144 of the blanking periods. In any case, the merge synchronization signal 132 is preferably synchronize with the frame rate dictated by the display protocol such that the merge unit 106 initiates the production of, or releases, the combined frame image data for display at the end of at least one of the blanking periods.

In order for the local frame buffers 112 to be ready to release the combined frame image data for display at the ends 142, 144 of the blanking periods, at least some of the graphics processors 104 preferably initiate rendering the image data into the frame buffers 112 prior to the ends 142, 144 of the blanking periods, such as at 136A-D. As shown, four rendering processes are initiated at respective times 136A-D, although any number of rendering processes may be employed using any number of graphics processors 104 without departing from the scope of the invention. Further, the rendering processes in each of the graphics processors 104 may be initiated at the same time or may be initiated at different times. In accordance with at least one aspect of the present invention, the rendering units 110 of the graphics processors 104 are preferably operable to begin rendering the image data into the respective frame buffers 112 asynchronously with respect to the merge synchronization signal 132. For example, the control processor 102 may issue a "begin rendering" command (or trigger) to the graphics processors 104, where the begin rendering command is asynchronous with respect to the merge synchronization signal 132. The begin rendering command may be given any suitable name, such as DRAWNEXT. It is also contemplated that the processing units 114 may initiate rendering as a result of software program execution without specific triggering from the control processor 102. Each (or a group) of the graphics processors 104 may complete the rendering process of the image data into the respective frame buffers 112 at any time (e.g., at 138A-D). It is preferred that at least one of the graphics processors 104 is operable to issue a rendering complete signal to the control processor 102 when it has completed rendering a frame of the frame image data. The rendering complete command may be given any suitable name, such as DRAWDONE.

In response to the merge synchronization signal 132, the respective graphics processors 104 preferably release the frame image data from the respective local frame buffers 112 to the merge unit 106 such that the merge unit 106 may synchronously produce the combined frame image data therefrom. The combined frame image data are preferably produced by the merge unit 106 during the interval between the end of one blanking period and the beginning of the next blanking period as shown by the logic transitions labeled 140.

With reference to FIGS. 3 and 4, one or more of the graphics processors 104 preferably include a respective local synchronization circuit 118 operable to receive the merge synchronization signal 132 over synchronization lines 129 from the synchronization unit 108 or from the merge unit 106. The respective local synchronization units 118 are preferably further operable to deliver the synchronization signal to the various portions of the graphics processors 104 to enable them to synchronously release the respective frame image data from the local frame buffers 112 to the merge unit 106. The local synchronization circuits 118 preferably employ counters to count between respective transitions of the merge synchronization signal 132.

In accordance with one or more further aspects of the present invention, the control processor 102 is preferably operable to instruct the respective graphics processors 104 and the merge unit 106 to operate in one or more modes that affect at least one of (i) timing relationships between when image data are rendered, when frame image data are released from respective local frame buffers 112, and when the frame image data are merged; and (ii) how the frame image data are merged to synchronously produce the combined frame image data. As discussed above with respect to FIG. 4, one of these modes provides that at least some of the graphics processors complete rendering the image data into the respective frame buffers 112 prior to the end of each blanking period.

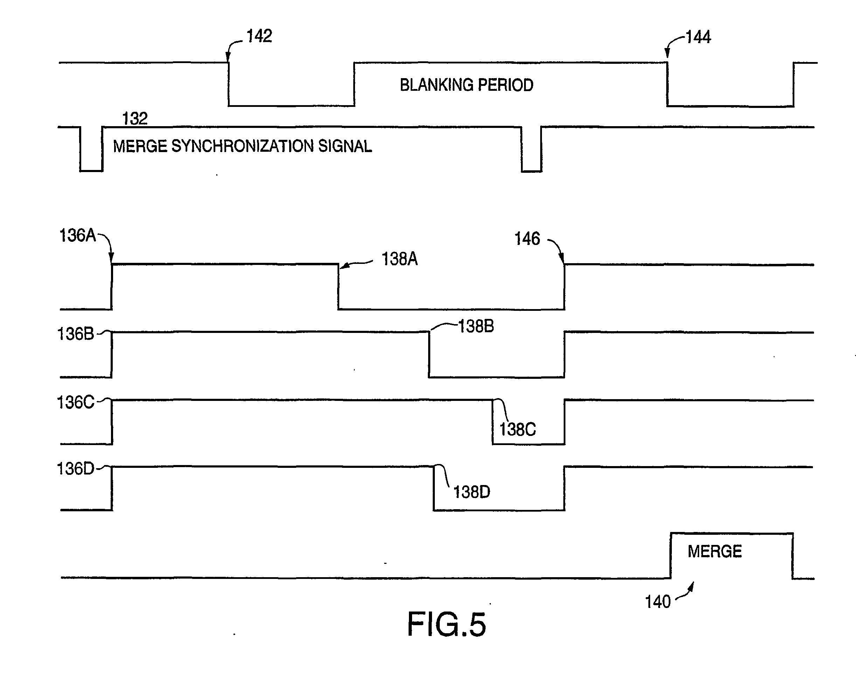

Another of these modes preferably provides that one of more of the graphics processors 104 completes rendering the image data into the respective frame buffers 112 prior to the end of an integral number of blanking periods. This mode is illustrated in FIG. 5, which is a timing diagram showing the relationship between the frame rate, the blanking period, the merge synchronization signal 132, the rendering period, and the merge period carried out by the apparatus 100 of FIG. 3. The plurality of graphics processors 104 may initiate the rendering of the image data into the respective local frame buffers 112 (e.g., at 136) either synchronously, asynchronously, in response to a begin rendering command (DRAWNEXT) from the control processor 102 or processing units 114, etc., it being most preferred that at least a group of the graphics processors 104 initiate rendering at substantially the same time and at some point during a blanking period. Each of the graphics processors 104 may complete the rendering process at different times, such as at 138A-D.

According to this mode of operation, however, the rendering processes need not be completed prior to the termination of each blanking period; rather, they may be completed prior to the termination of an integral number of blanking periods (such as two blanking periods as shown). Although at least some of the graphics processors 104 may not complete a given rendering process prior to the end 142 of a first blanking period, they may complete the rendering process prior to the end 144 of a second blanking period. Advantageously, in this mode of operation, each of the graphics processors 104 enjoys the benefit of additional time during which to render the image data into the respective local frame buffers 112. In response to the merge synchronization signal 132, the respective graphics processors 104 preferably release the frame image data from the respective local frame buffers 112 to the merge unit 106 at the end of every second blanking period (such as at 144). New image data may be rendered into the local frame buffers 112 beginning at, for example, 146. Although in the example illustrated in FIG. 5, the integral number of blanking periods is two, any integral number may be employed in this mode of operation without departing from the scope of the invention.

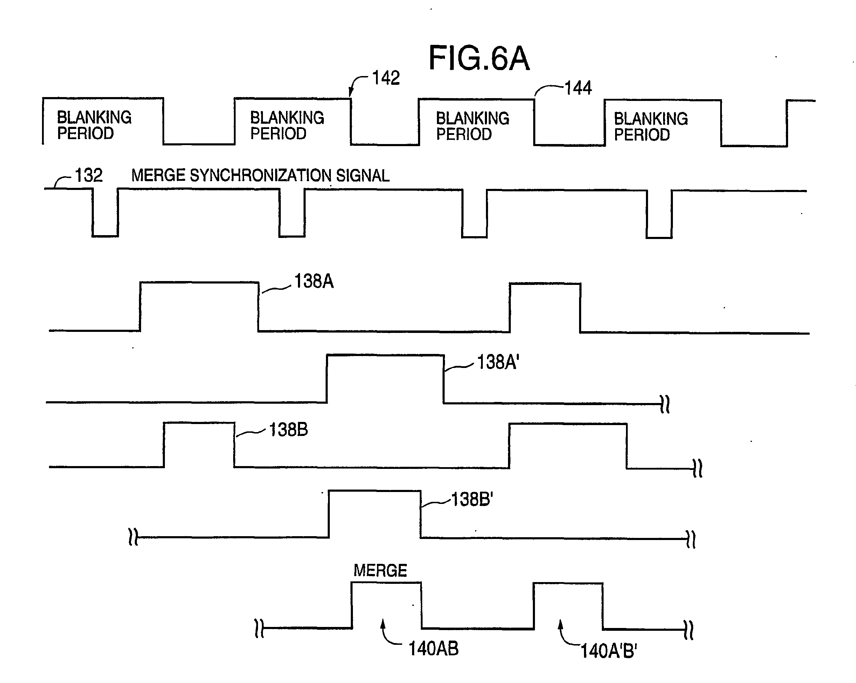

In accordance with yet another mode of operation of the invention, and with reference to FIG. 6A, one or more of the graphics processors 104 may each include an integral number of local frame buffers 112 (e.g., two local frame buffers used in so-called "double buffering"). In a given frame of the display protocol, only one of the integral number of local frame buffers 112 of a given graphics processor 104 need contain a full frame of frame image data and, therefore, that graphics processor 104 need only complete rendering the image data into the respective integral number of local frame buffers 112 prior to the end of a corresponding integral number of blanking periods. For example, a first graphics processor 104 may include two local frame buffers 112A, 112A' and a second graphics processor 104 may include two more local frame buffers 112B, 112B'. In accordance with this mode of operation, the first graphics processor 104 should complete rendering the image data into local frame buffer 112A prior to the end 142 of a first blanking period (e.g., at 138A) and preferably before a next trigger to begin rendering is received. It is noted that the first graphics processor 104 need not complete rendering the image data into local frame buffer 112A' until prior to the end 144 of a second blanking period (e.g., at 138A') and preferably before yet another trigger to begin rendering is received. Indeed, the first graphics processor 104 need not even begin rendering the image data into local frame buffer 112A' until after the image data are rendered into the first local frame buffer 112A.

Similarly, the second graphics processor 104 should complete rendering the image data into local frame buffer 112B prior to the end 142 of the first blanking period (e.g., at 138B), while the second graphics processor 104 need not complete rendering the image data into local frame buffer 112B' until prior to the end 144 of the second blanking period (e.g., at 138B'). As frame image data are available for release from the local frame buffer 112A and the local frame buffer 112B prior to the end 142 of the first blanking period, such frame image data are preferably released in response to the merge synchronization signal 132 to the merge unit 106 as shown in FIG. 6A at 140AB. As frame image data are available in each of local frame buffer 112A' and local frame buffer 112B' prior to the end 144 of the second blanking period, such frame image data are preferably released in response to the merge synchronization signal 132 to the merge unit 106 as shown at 140A'B'.

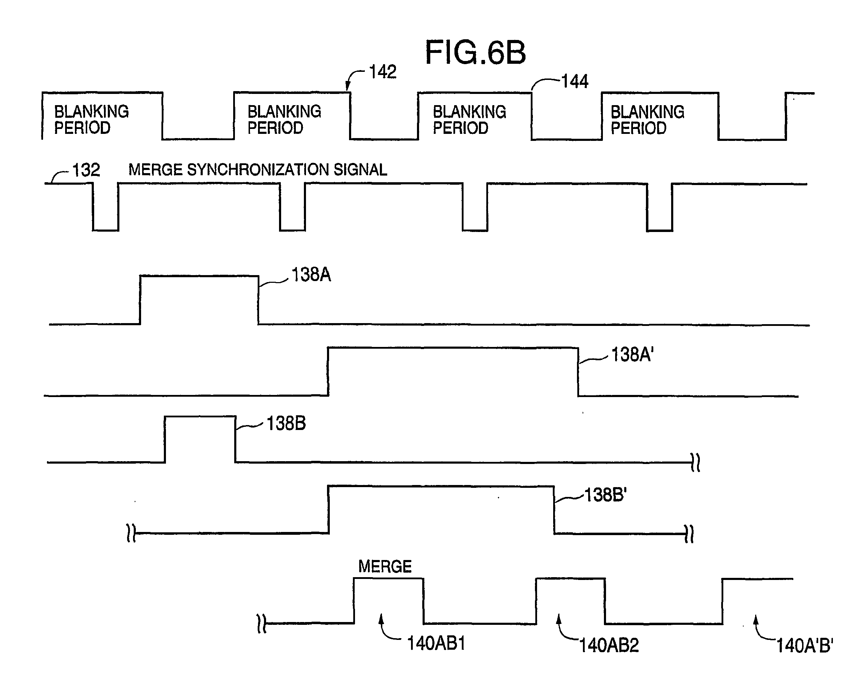

With reference to FIG. 6B, an error condition could occur if one or both of the first and second graphics processors 104 fail to complete rendering into one or both of the local frame buffers 112A', 112B', respectively, prior to 144. In this case, release of the frame image data from local frame buffer 112A'(and/or 112B') to the merge unit 106 is not permitted (i.e., just after 144) and the contents of local frame buffers 112A and 112B are re-released to the merge unit 106 (at 140AB2). When the first graphic processor 104 completes rendering into the respective local frame buffers 112A', 112B', the frame image data therein may be released at the end of the next blanking period, e.g., at 140A'B'. This advantageously minimizes the effects of the error condition.

Although in the above examples only two graphics processors 104 each containing two local frame buffers 112 have been discussed, the invention contemplates any number of graphics processors 104 each containing any number of local frame buffers 112. It is noted that this mode may also apply to a group of graphics processors 104 each containing only one local frame buffer 112. In this case, each graphics processor 104 would enjoy a time period during which rendering could be performed that corresponds to the number of graphics processors 104 (or local frame buffers 112) participating in the mode of operation. Each graphics processor 104 would complete rendering into a given local frame buffer 112 prior to the end of an integral number of blanking periods that corresponds with the integral number of graphics processors 104 (or local frame buffers 112) participating in the mode of operation. For example, when four graphics processors 104 participate in the mode of operation and each graphics processor 104 includes a single local frame buffer 112, each graphics processor 104 could enjoy a time period during which rendering may be performed that corresponds to four frames of the display protocol.

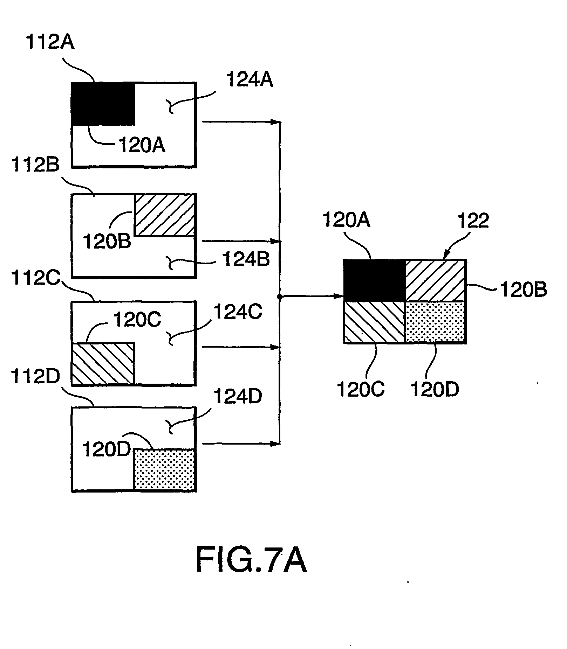

With reference to FIGS. 7A-E, the modes of operation in accordance with one or more aspects of the present invention preferably include at least one of area division, averaging, layer blending, Z-sorting and layer blending, and flip animation. With reference to FIG. 7A, the area division mode of operation preferably provides that at least two of the local frame buffers 112 (as shown, four local frame buffers 112A-D are contemplated) are partitioned into respective rendering areas 120A-D that correspond with respective areas of the display screen that will be covered by the combined frame image data 122, and non-rendering areas 124A-D that are not utilized to carry frame image data. In accordance with the area division mode, an aggregate of the rendering areas 120A-D results in a total rendering area that corresponds with a total area of the display screen that will be covered by the combined frame image data 122. In this mode, the merge unit 106 is preferably operable to synchronously aggregate the respective frame image data from the respective rendering areas 120A-C of the graphics processors 104 based on the known alpha blending technique to produce the combined frame image data. The local frame buffers 112A-D may be employed by separate graphics processors 104 or may be employed by, and distributed among, a lesser number of graphics processors 104. The area division mode of operation may take advantage of one or more of the timing relationships discussed hereinabove with respect to FIGS. 4, 5 and 6A, it being preferred that the one or more graphics processors 104 complete rendering the image data into the respective rendering areas 120A-D of the local frame buffers 112A-D prior to the end of each blanking period (for example, see FIG. 4).

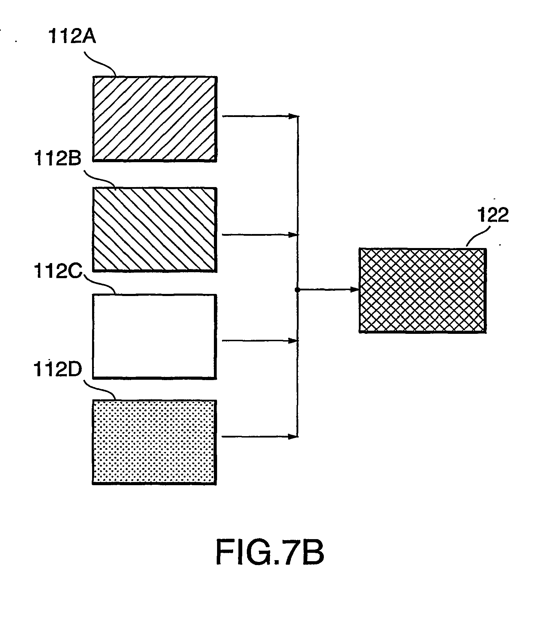

With reference to FIG. 7B, the averaging mode of operation preferably provides that the local frame buffers 112 of at least two of the graphics processors 104 (as shown, four local frame buffers 112A-D are contemplated) include rendering areas 120A-D that each correspond with the total area covered by the combined frame image data 122. The averaging mode further provides that the merge unit 106 averages the respective frame image data from the local frame buffers 112 to produce the combined frame image data for display. The averaging process may include at least one of scene anti-aliasing, alpha-blending (e.g., scene-by-scene), weighted averaging, etc. as are well within the knowledge of those skilled in the art. The averaging mode of operation may employ one or more of the timing relationships discussed hereinabove with respect to FIGS. 4, 5, and 6A, it being preferred that each of the graphics processors participating in this mode of operation complete rendering the image data into the respective rendering areas 120A-D of the local frame buffers 112A-D prior to the end of each blanking period (for example, see FIG. 4).

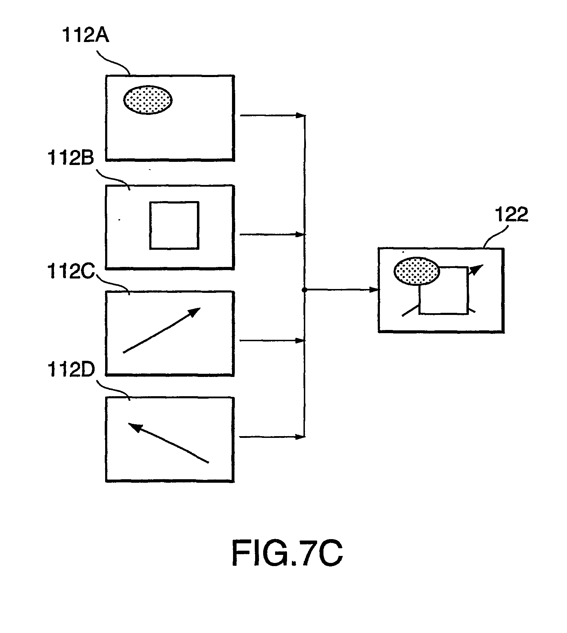

With reference to 7C, the layer blending mode preferably provides that at least some of the image data are rendered into the local frame buffers 112 (as shown, four such local frame buffers 112A-D are contemplated) of at least two of the graphics processors 104 such that each of the local frame buffers 112A-D includes frame image data representing at least a portion of the combined frame image data. For example, each portion of the combined frame image data may be an object of the final image. The layer blending mode preferably further provides that each of the portions of the combined frame image data area prioritized, such as by Z-data representing depth. The layer blending mode preferably further provides that the merge unit 106 is operable to synchronously produce the combined frame image data by layering each of the frame image data of the respective local frame buffers 112A-D in an order according to the priority thereof. For example, layering a second frame of frame image data over a first frame of frame image data may result in overwriting some of the first frame image data depending on the priority of the layers. When the priority of the layers corresponds with the relative depth of the portions of the combined frame image data (e.g., objects of the image), one layer of frame image data may be designated as being nearer to a point of view than another layer of frame image data. Therefore, an illusion of depth may be created by causing the layer of frame image data designated as being nearer to the point of view to overwrite at least portions of a layer of frame image data being farther from the point of view (for example, see FIG. 7C at 122). The layering mode of operation may employ one or more of timing relationships discussed hereinabove with respect to FIGS. 4, 5, and 6A, it being preferred that the graphics processors 104 participating in the layer blending mode complete rendering the image data into the respective local frame buffers 112A-D prior to the end of each blanking period.

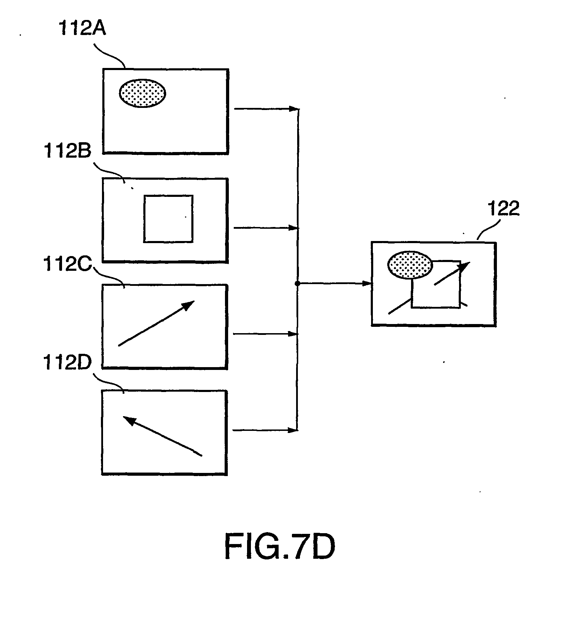

With reference to FIG. 7D, the Z-sorting and layer blending mode preferably provides that at least some of the image data are rendered into the local frame buffers (as shown, four such local frame buffers 112A-D are contemplated) of at least two of the graphics processors 104 such that the local frame buffers 112A-D include frame image data representing at least a portion of the combined image data. As discussed above with respect to the layer blending mode, the portions of the combined frame image data may represent objects of the image to displayed. The Z-sorting and layer blending mode preferably further provides that the frame image data include Z-values representing image depth (e.g., on a pixel-by-pixel basis) and that the merge unit 106 is operable to synchronously produce the combined frame image data by Z-sorting and layering each of the frame image data in accordance with the image depth. Advantageously, as shown in FIG. 7D, some portions of the combined frame image data, such as that stored in the local frame buffer 112A may overwrite other portions of the frame image data, such as that stored in local frame buffer 112B assuming that the relative depths dictated by the Z-values provide for such overwriting. The Z-sorting and layer blending mode may employ one or more of the timing relationships discussed hereinabove with respect to FIGS. 4, 5, and 6A, wherein it is preferred that the graphics processors 104 complete rendering the image data into the respective local frame buffers 112 prior to the end of each blanking period (for example, see FIG. 4).

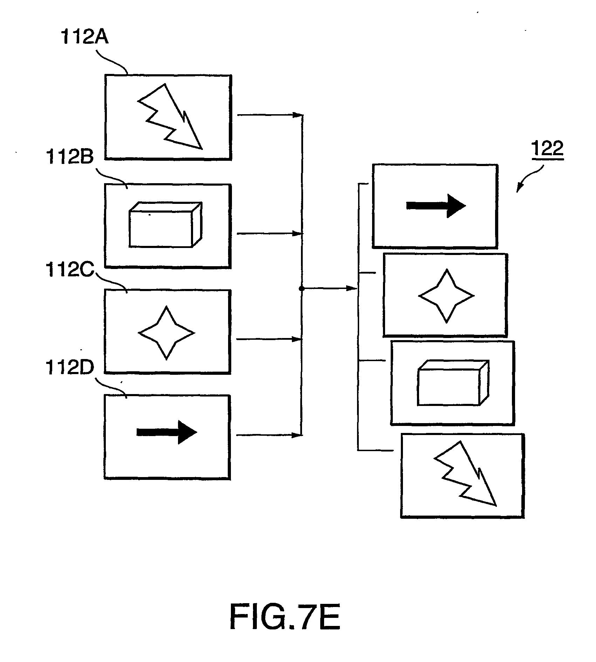

With reference to FIG. 7E, the flip animation mode preferably provides that the local frame buffers 112 (as shown, four local frame buffers 112A-D are contemplated) of at least two graphics processors 104 include frame image data that are capable of covering the total area covered by the combined frame image data and that the merge unit 106 is operable to produce the combined frame image data by sequentially releasing the respective frame image data from the local frame buffers 112 of the graphics processors 104. The flip animation mode may employ one or more of the timing relationships discussed hereinabove with respect to FIGS. 4, 5, and 6A, it being preferred that the graphics processors 104 complete rendering the image data into the respective frame buffers 112A-D prior to the ends of an integral number of blanking periods, where the integral number of blanking periods corresponds to the number of graphics processors 104 participating in the flip animation mode (for example, see FIGS. 5 and 6A). Alternatively, the integral number of blanking periods may correspond to the number of local frame buffers 112 participating in the flip animation mode.

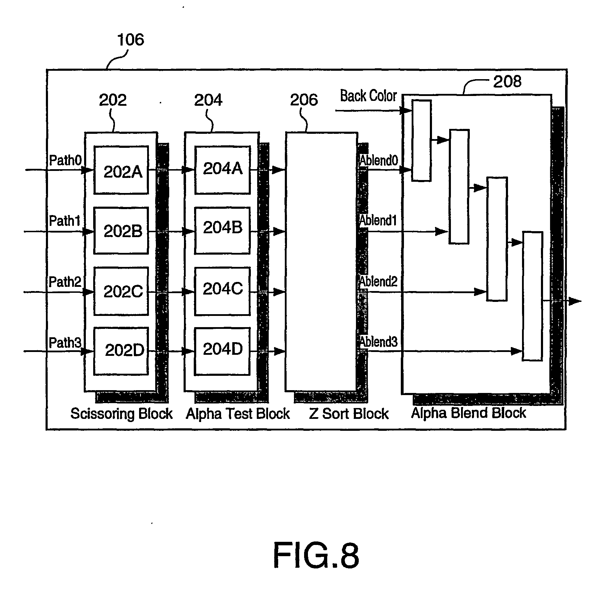

With reference to FIG. 8, an example of one circuit or function configuration suitable for implementing the merge unit 106 employed by the invention is shown. The merge unit 106 preferably includes a scissoring block 202, an alpha-test block 204, a Z-sort block 206, and an alpha-blending block 208. The scissoring block 202 preferably includes a plurality of sub-blocks 202A, 202B, 202C, 202D, etc., one such sub-block for each of the frame image data (or path) received. The scissoring block 202 in total, and the sub-scissoring blocks 202A-D in particular, is preferably operable to validate certain of the frame image data and to invalidate other portions of the frame image data (e.g., validating a portion of the frame image data corresponding to a given rectangular area for use in producing the combined frame image data). This functionality is particularly useful in operating in the area division mode (see FIG. 7A and corresponding discussion hereinabove).

The output of the scissoring block 202 is received by the alpha-test block 204, where certain of the frame image data are invalidated based on a comparison between alpha values of the frame image data and a constant. The alpha-test block 204 preferably includes a plurality of sub-blocks 204A, 204B, 204C, 204D, etc., one such sub-block for each of the frame image data (or path) received. The functionality of the alpha-test block 204 is particularly useful when the frame image data includes useful information concerning one or more objects utilized in producing the combined frame image data, but where other portions of the frame image data do not contain useful information. For example, if the frame image data is intended to represent a tree (i.e., an object utilized in the final image displayed), the alpha values associated with the pixels of the tree may be of sufficient magnitude to indicate that the data is valid, but the pixels of the frame image data associated with areas other than the tree may be unimportant and unusable and, therefore, advantageously discarded.

The Z-sort block 206 preferably performs Z-sorting of the frame image data on a pixel-by-pixel basis. Alternatively, the Z-sort block 206 may perform Z-sorting on a frame image data basis, e.g., selecting one of the four sources (or paths) of frame image data as representing a nearest image, selecting a next one of the sources of frame image data as being the next nearest image, etc. The alpha-blend block 208 preferably performs alpha-blending according to known formulas such as: (1-á)·(pixel,n-1) + á·(pixel, n). As shown, alpha-blending is preferably performed among each of the frame data received.

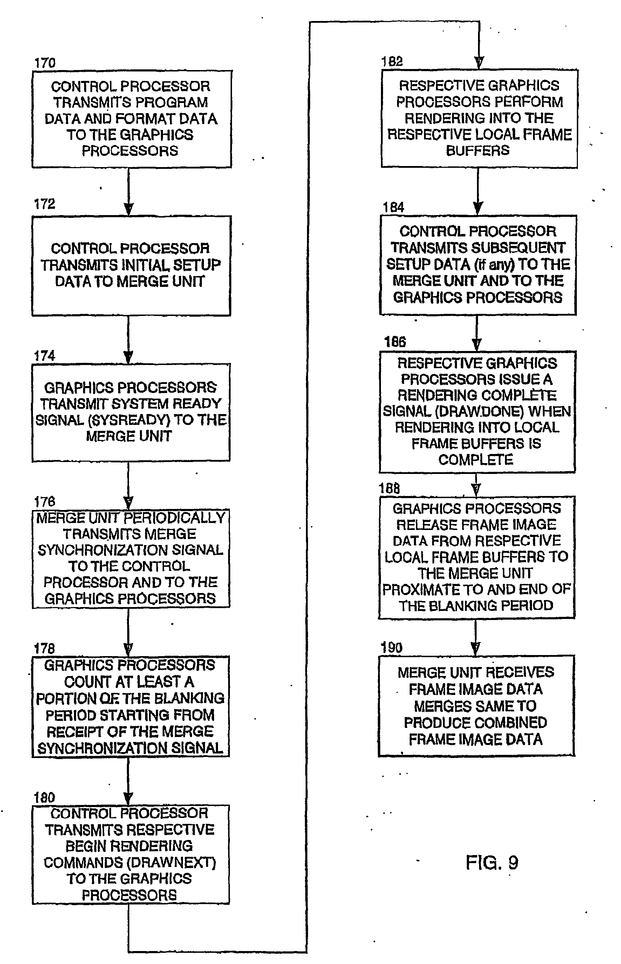

With reference to FIGS. 3, 4, and 9, the high level flow diagram of FIG. 9 provides additional details concerning one or more further aspects of the apparatus 110 of the present invention. Actions 170 and 172 relate to initializing the plurality of graphics processors 104, the merge unit 106, and the synchronization unit 108. In particular, at action 170, the control processor 102 preferably transmits program data and format data to the graphics processors 104. In accordance with the invention, the program data and the format data preferably imbue the graphics processors 104 with the necessary capability to carry out one or more of the modes of operation discussed hereinabove with respect to FIGS. 4-7.

The program data, for example, may include at least portions of one or more software application programs used by the graphics processors 104 to processing the image data. Such software application programs may facilitate certain processing functions, such as polygonal spatial transformation, 3D-2D conversion, magnification/reduction (i.e., scaling), rotation, lighting, shading, coloring, etc. In general, the program data preferably facilitates the production of the sequence instructions, such as a sequence of polygonal instructions produced from the image data and suitable for rendering into the local frame buffers 112. Preferably, the program data are transmitted to the plurality of graphics processors 104 by way of the bus 126.

The format data preferably relate to at least one of the modes of operation (e.g., the timing relationships, area division, averaging, layer blending, z-sorting and layer blending, flip animation, etc.); display protocol information, such as the NTSC protocol, the HDTV protocol, the 35 mm film cinematography protocol, etc. More particularly, the display protocol may include information concerning the desired frame rate, blanking period, the display size, the display aspect ratio (e.g., the ratio between the display height to width), the image resolution, etc. In general, the format data ensure that the graphics processors 104 are configured to execute a particular mode or modes of operation before called upon to render the image data or release frame image data to the merge unit 106. Preferably, the format data are transmitted to the plurality of graphics processors 104 by way of the bus 126.

At action 172, initial set-up data are transmitted to the merge unit 106. The initial setup data preferably includes a substantially similar set of data as the format data. In this way, the graphics processors 104 and the merge unit 106 are configured to execute the same mode or modes of operation. Preferably, the initial setup data are transmitted to the merge unit 106 by way of bus 126.

The graphics processors 104 preferably transmit system ready signals to at least one of the respective local synchronization units 118 and the control processor 102 when they have initialized themselves consistent with the program data and format data (action 174). The system ready signals may have any suitable name, such as SYSREADY. The system ready signals are preferably transmitted to the control processor 102 by way of the bus 126.

The synchronization circuit 108 preferably periodically transmits the merge synchronization signal 132 to the control processor 102 and to the graphics processors 104. Alternatively, the merge unit 106 periodically transmits the merge synchronization signal 132 to the graphics processors 104. In either case, the merge synchronization signal 132 is synchronized to a desired frame rate and blanking period associated with the desired display protocol (action 176). The merge synchronization signal 132 is preferably transmitted to the graphic processors 104 by way of the dedicated synchronization lines 129 (or by way of the merge unit 106) and to the control processor 102 by way of the bus 126. When the graphics processors 104 include a local synchronization circuit 118, they preferably count a predetermined number of clock signals (or cycles) between transitions of the merge synchronization signal 132 to ensure that the frame image data are released at the proper time (action 178).

At action 180, the control processor 102 preferably transmits a begin rendering command instruction (or trigger) DRAWNEXT indicating that the graphics processors 104 should initiate the rendering of the image data into the respective local frame buffers 112. This trigger may be transmitted to the graphics processors 104 over the bus 126, it being preferred that the trigger is issued through the synchronization unit 108 to the respective local synchronization units 118 of the graphics processors 104. As discussed above, however, the graphics processors 104 need not receive an explicit trigger from the control processor 102 if an application software program running locally on the processing units 114 provides a begin rendering command itself. Certain advantages, however, are achieved when the control processor 102 issues a trigger to at least some of the graphics processors 104 indicating when the graphics processors 104 should begin rendering the image data into the respective local frame buffers 112. At action 182, the respective graphics processors 104 perform the rendering function on the image data to produce the frame image data and store the same in the respective local frame buffers 112.

At action 184, the control processor 102 may transmit subsequent setup data to the graphics processors 104 and the merge circuit 106. For example, to change the mode of operation from frame to frame.

At action 186, at least one of the graphics processors 104 preferably issues a signal to the control processor 102 indicating that rendering is complete (e.g., DRAWDONE). The rendering complete signal may be transmitted to the control processor 102 by way of the bus 126, it being preferred that the signal is transmitted through the local synchronization circuit 118 to the synchronization unit 108 prior to being delivered to the control processor 102.

At action 188, the appropriate graphics processors 104 release the frame image data from the respective local frame buffers 112 to the merge unit 106 (e.g., when the merge synchronization signal 132 indicates that the end of an appropriate blanking period has been reached) and the merge unit 106 produces the combined frame image data for display (action 190). At least some of these processes are repeated frame-by-frame to produce a high quality moving image for display on the display screen.

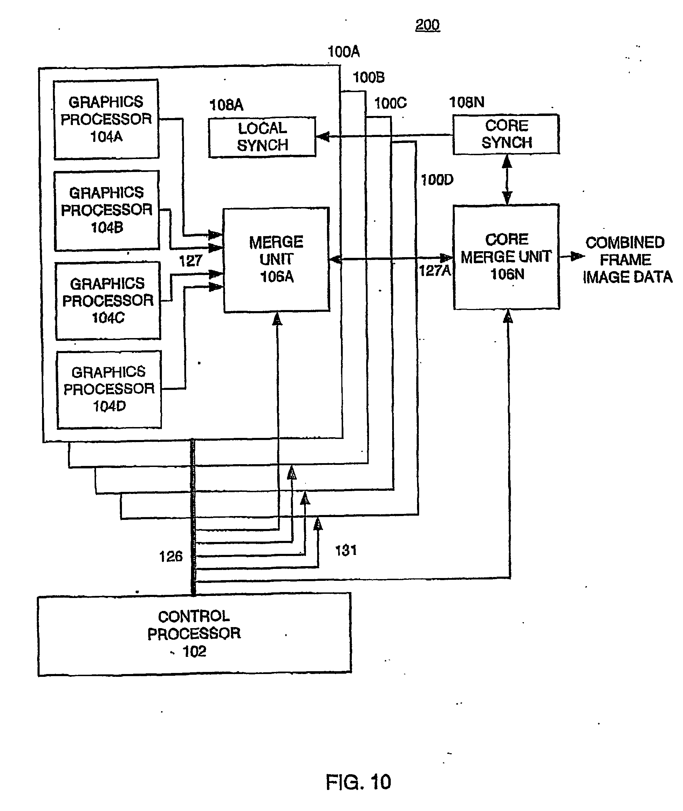

Advantageously, the apparatus 100 readily lends itself to scalability when additional data throughput is required. Referring now to FIG. 10, an apparatus 200 for processing image data to produce an image for display in accordance with one or more further aspects of the present invention is shown. The apparatus 200 includes a control processor 102, a plurality of graphics apparatuses 100A-D, a core merge unit 106N, and a core synchronization unit 108N. The respective graphics apparatuses 100A, 100B, 100C, etc. in FIG. 10 are preferably substantially similar to the apparatus 100 shown in FIG. 3. The merge unit 106 of FIG. 3 corresponds to respective local merge units 106A, 106B, 106C, etc. that are coupled to respective sets of graphics processors 104. The local merge units 106A, 106B, 106C, etc. each preferably produce local combined frame image data consistent with the modes of operation discussed hereinabove. Each of the local merge units 106A, 106B, 106C, etc. are preferably coupled to the core merge unit 106N, which is operable to synchronously receive the local combined frame image data and to synchronously produce combined frame image data to be displayed.

The core merge unit 106N is preferably operable to produce the merge synchronization signal 132 and each apparatus 100A, 100B, 100C, etc. preferably includes a local synchronization unit 108A, 108B, 108C, etc., respectively, (that corresponds to the synchronization unit 108 of FIG. 3). The respective local synchronization units 108A, 108B, 108C, etc. preferably utilize the merge synchronization signal 132 to ensure that the frame image data are synchronously released to each of the local merge units 106A, 106B, 106C, etc. and ultimately released to the core merge unit 106N.

Preferably, the respective local frame buffers 112 of the respective groups of graphics processors 104A-D are operatively coupled to the respective local merge units 106A-D by way of separate data lines 127 such that exclusive communication between the respective local frame buffers and the respective local merge units is obtained (e.g., such that exclusive transmission of the frame image data to the respective local merge units 106A, 106B, 106C, etc. is obtained). Preferably, separate data lines 127A-D couple the respective local merge units 106A-D to the core merge unit 106N such that exclusive communication therebetween is obtained (e.g., such that exclusive transmission of the local combined frame image data from the respective local merge units 106A-D to the core merge unit 106N is obtained). Further, separate synchronization lines preferably couple the respective local synchronization units 108A-D to the core synchronization unit 108N such that exclusive communication therebetween is obtained. Although not explicitly shown, a bus, substantially similar to the bus 126 of FIG. 3, preferably extends from the control processor 102 to each of the graphics processors 104A, 104B, 104C, etc., the core merge unit 106N, and the core synchronization unit 108N.

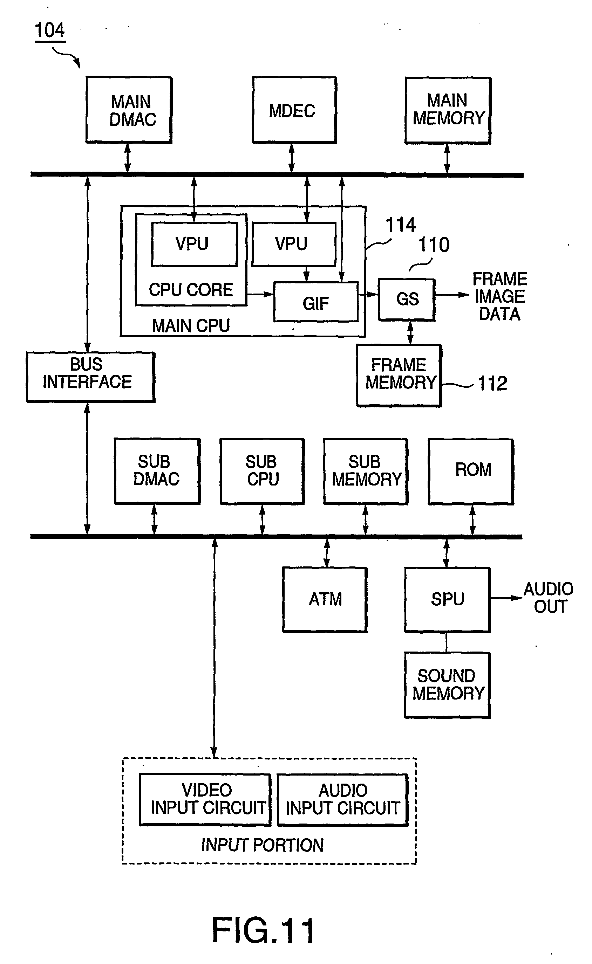

As was discussed above with respect to FIG. 9, the apparatus 200 preferably operates according to the high level flow diagram shown such that one or more of the modes of operation (see FIGS. 4-7) may be carried out, preferably on a frame-by-frame basis. More particularly, the control processor 102 is preferably operable to transmit subsequent setup data to the respective apparatuses 100A-D, e.g., to the graphics processors 104, the local merge units 106A-D, and the core merge unit 106N on a frame-by-frame basis. Preferably, the core merge unit 106N and the respective local merge units 106A-D are operatively coupled to the control processor 102 by way of separate control data lines 131 such that exclusive communication between the control processor 102, the core merge unit 106N, and the respective local merge units 106A-D at least concerning the instructions to operate in different modes from one frame to the next is obtained
With reference to FIG. 11, each of the graphics processors 104 is preferably implemented consistent with the block diagram shown. The salient functions of rendering 110, frame buffering 112, processing 114, etc. discussed above are labeled as such, it being understood that the specific details concerning the operation of this configuration may be found in co-pending U.S. Patent Application No. 09/502,671, filed February 11, 2000, entitled GAME MACHINE WITH GRAPHICS PROCESSOR, assigned to the assignee of the instant invention, and the entire disclosure of which is hereby incorporated by reference.

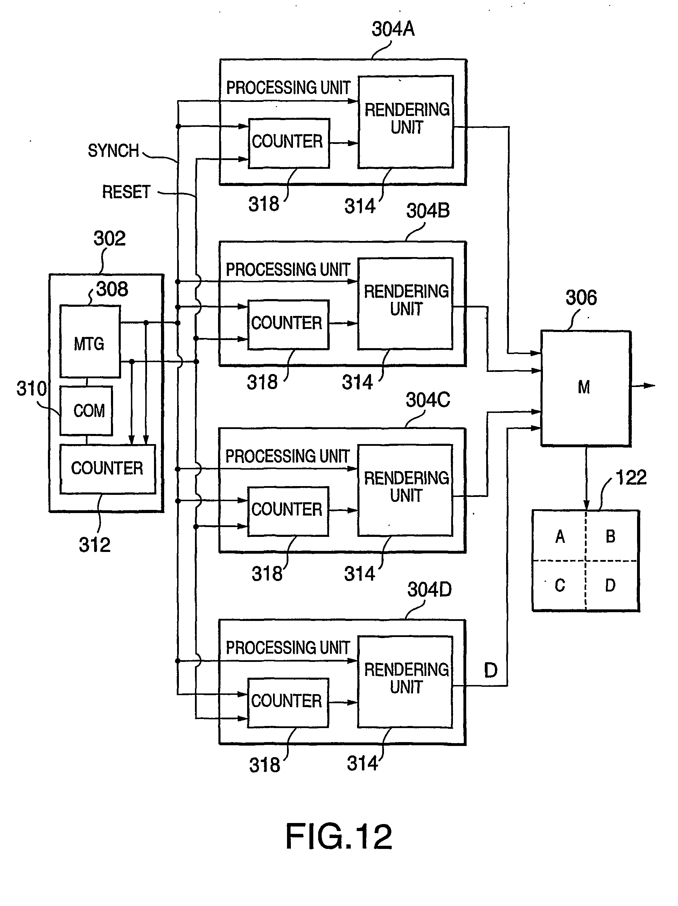

Reference is now made FIG. 12, which illustrates an apparatus 300 for processing image data to produce an image for display in accordance with one or more further aspects of the present invention. The apparatus 300 preferably includes a control processor 302, a plurality of graphics processors 304, and a merge unit 306. The control processor 302 is preferably operable to provide instructions to the plurality of graphics processors 304. The control processor 302 preferably includes a master timing generator 308, a controller 310, and a counter 312. The master timing generator 308 is preferably operable to produce a synchronization signal that is synchronized with blanking periods of a display protocol, such as one or more of the display protocols discussed hereinabove. The controller 310 is preferably operable to provide instructions to the plurality of graphics processors 304 similar to the instructions that the control processor 102 of FIG. 3 provides to the graphics processors 104 of the apparatus 100. In addition, the control processor 302 preferably provides reset signals to the plurality of graphics processors 304 (utilized in combination with the synchronization signal) to synchronize the release of frame image data to the merge unit 306 as will be discussed in more detail below.

Each of the graphics processors 304 preferably includes a rendering unit 314 operable to render image data into frame image data and to store the frame image data in a respective local frame buffer (not shown). Indeed, each graphics processor 304 preferably includes at least some of the functional blocks employed in the graphics processors 104 of FIG. 3. In addition, each graphics processor 304 preferably includes a synchronization counter 318 operable to produce a local synchronization count indicating when the frame image data should be released from the local frame buffer. The respective synchronization counters 318 preferably one of increment and decrement their respective synchronization counts based on the synchronization signal from the timing generator 308. The graphics processors 304 are preferably operable to release their respective frame image data to the merge unit 306 when their respective local synchronization counts reach a threshold. The reset signals issued by the control 310 of the control processor 302 are preferably utilized to reset the synchronization counters 318 of the respective graphics processors 304. In this way, the control processor 302 is operable to manipulate the timing of the release of the frame image data from the respective rendering units 314. Thus, the apparatus 300 may facilitate the modes of operation discussed hereinabove with respect to FIGS. 4-7, e.g., the timing relationships, area division, averaging, layer blending, z-sorting and layer blending, and flip animation.

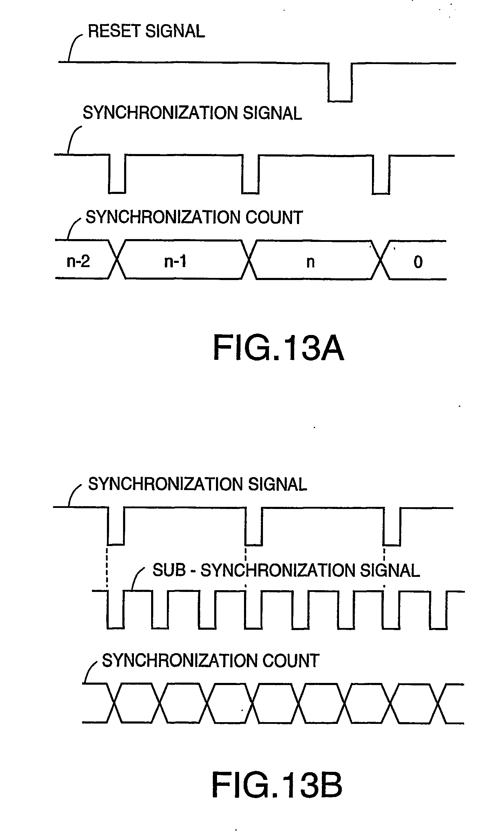

With reference to FIG. 13A, timing relationships between the synchronization signal issued by the timing generator 308, the reset signal, and a respective one of the synchronization counters 318 are illustrated. In particular, the synchronization counter 318 increments (or decrements) on transitions of the synchronization signal. The reset signal, however, resets the synchronization counter 318 to begin counting from a predetermined level, such as zero. With reference to FIG. 13B, an alternative configuration may be employed to achieve a finer timing accuracy. In particular, the synchronization counters 318 may be substituted by, or operate in conjunction with, sub-synchronization counters (not shown) and the timing generator 308 may produce a sub-synchronization signal operating at a higher frequency than the synchronization signal. The sub-synchronization counters preferably one of increment and decrement in response to transitions of the sub-synchronization signal and are reset upon receipt of the reset signal from the control processor 302. Using this arrangement, the graphics processors 304 are preferably operable to release their respective frame image data to the merge unit 306 when the respective sub-synchronization counters reach a threshold (which would be higher than the threshold employed using the timing of FIG. 13A).

With reference to FIGS. 10 and 12, the apparatus 300 may be scaled in a substantially similar way as shown in FIG. 10, i.e., where the plurality of graphics processors 304 are grouped into respective sets, each set being coupled with a local merge unit; and the respective local merge units being coupled to a core merge unit. The core merge unit is preferably operable to synchronously receive the local combined frame image data from the respective local merge units and to synchronously produce the combined frame image data thereon.

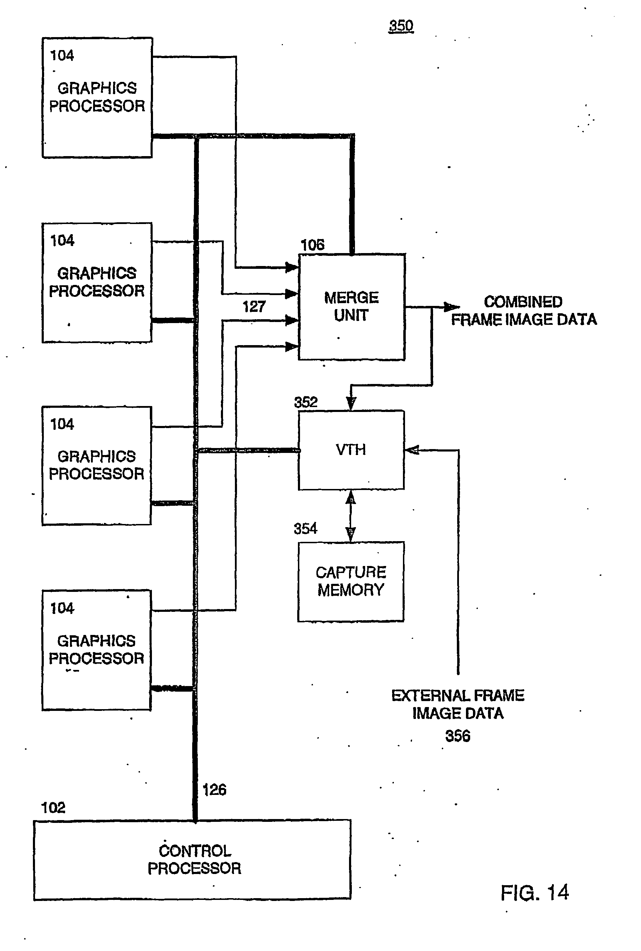

Reference is now made to FIG. 14, which is a block diagram of an apparatus 350 that operates in accordance with one or more further aspects of the present invention. In some respects, the apparatus 350 is substantially similar to the apparatus 100 of FIG. 3. For example, the apparatus 350 includes a plurality of graphics processors 104, one or more of which are preferably operable to render image data into frame image data and to store the frame image data in a respective local frame buffer. Indeed, the graphics processors 104 of apparatus 350 are preferably substantially similar to the graphics processors 104 of FIG. 3. The apparatus 350 also includes at least one merge unit 106 operatively coupled to the plurality of graphics processors 104 and operable to synchronously receive the frame image data from the respective local frame buffers of the graphics processors 104 and to synchronously produce combined frame image data based thereon. The apparatus 350 also includes a control processor 102 operatively coupled to the graphics processors and the merge unit 106. It is most preferred that the portions of the apparatus 350 discussed to this point are substantially similar to those of FIG. 3 and, further, that the functionality of the apparatus 350 is substantially similar to the functionality of the apparatus 100 of FIG. 3.

The apparatus 350 also preferably includes a video transfer hub (VTH, or simply video hub) 352 operatively coupled to the output of the merge unit 106, i.e., operable to receive at least one frame of the combined frame image data. The video hub 352 is preferably further operable to receive at least one externally provided frame of frame image data 356. The video hub 352 is preferably coupled to the plurality of graphics processors 104 and the control processor 102 by way of the bus 126. The apparatus 350 also preferably includes a capture memory 354 operatively coupled to the video hub 352 and capable of receiving, storing, and subsequently releasing either or both of the at least one frame of combined frame image data and the at least one frame of external frame image data 356.

Upon command by one or more of the graphics processors 104, or by the control processor 102, the video hub 352 preferably facilitates the transmission of the at least one frame of the combined frame image data and/or the at least one frame of external frame image data 356 to one or more of the graphics processors 104. The one or more graphics processors 104 may then utilize the frame image data transmitted by the video hub 352 to produce a successive frame or frames of frame image data. Moreover, the merge unit 106 may receive these frame(s) of frame image data and produce a next frame of the combined frame image data based thereon.

By way of example, the video hub 352 may be utilized to combine frame image data from an external source (e.g., from film that has been digitized, from a separate graphics processing unit, from a source of streaming video, etc.) with one or more frames of frame image data being processed by the apparatus 350. This functionality is particularly advantageous when images from film, such as 35 mm cinematography, are to be combined with digitally generated images to achieve desirable special effects in the final moving image.

As the apparatus 350 is capable of synchronizing the merging function performed by the merge unit 106 in accordance with a display protocol, such as the display protocol of the external frame image data 356, high quality combined images may be achieved. Furthermore, as the apparatus 350 may be readily scaled, very high data throughput may be achieved to match or exceed the image quality standards of external images, such as film. It is noted that the apparatus 350 of FIG. 14 may be scaled in a substantially similar way as that of the apparatus 100 of FIG. 3 as discussed hereinabove with respect to FIG. 10. Indeed, one or more video hubs 352 (and one or more capture memories 354) may be employed in a circuit topology substantially similar to FIG. 10 to achieve higher data throughputs.

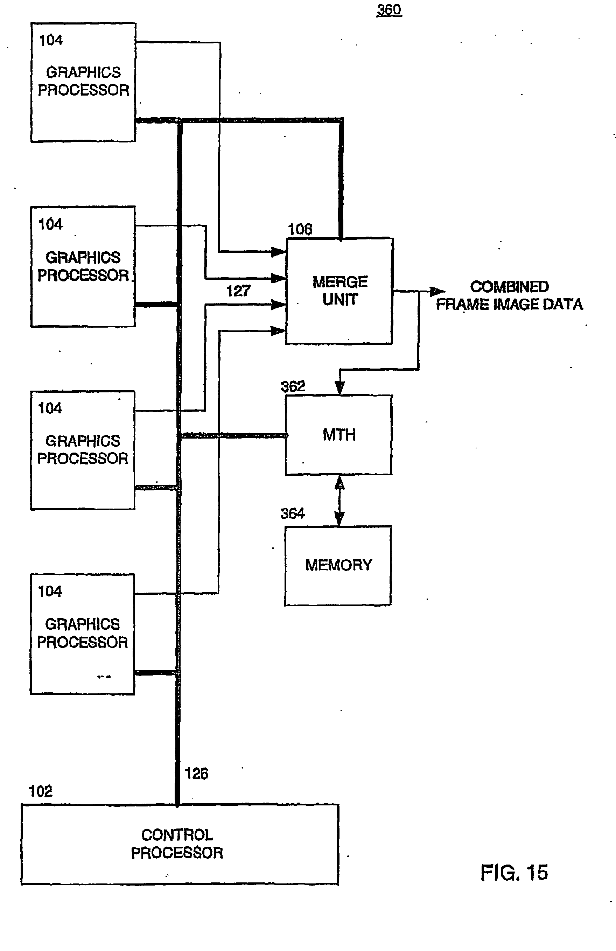

Reference is now made to FIG. 15, which illustrates an apparatus 360 suitable for use in accordance with one or more further aspects of the present invention. The apparatus 360 preferably includes several functional and/or circuit blocks that are substantially similar to those of FIG. 3, namely, a plurality of graphics processors 104 coupled to at least one merge unit 106 and to a control processor 102. Indeed, the apparatus 360 is preferably substantially similar to the apparatus 100 of FIG. 3 with respect to these functional blocks. The apparatus 360, however, further includes a memory transfer hub (MTH or simply memory hub) 362 operable to receive (for example, over the bus 126) and store common image data. A memory 364 is preferably operatively coupled to the memory hub 362 such that the common image data may be stored and retrieved therefrom. The common image data may take any form, such as texture data used when polygons are rendered into the respective local frame buffers. It is noted that such texture data often occupies a relatively large portion of memory, particularly when it has been decompressed. In order to reduce the amount of memory required at each of the plurality of graphics processors 104, the common image data (such as texture data) is preferably centrally stored in memory 364. When one or more of the graphics processors 104 requires the common image data, the memory hub 362 preferably retrieves the common image data from the memory 364 and transfers that data to the one or more graphics processors 104.

It is noted that the memory hub 362 and associated memory 364 may be utilized in a scaled system, such as that shown in FIG. 10 and/or FIG. 14 depending on the exigencies of the application.

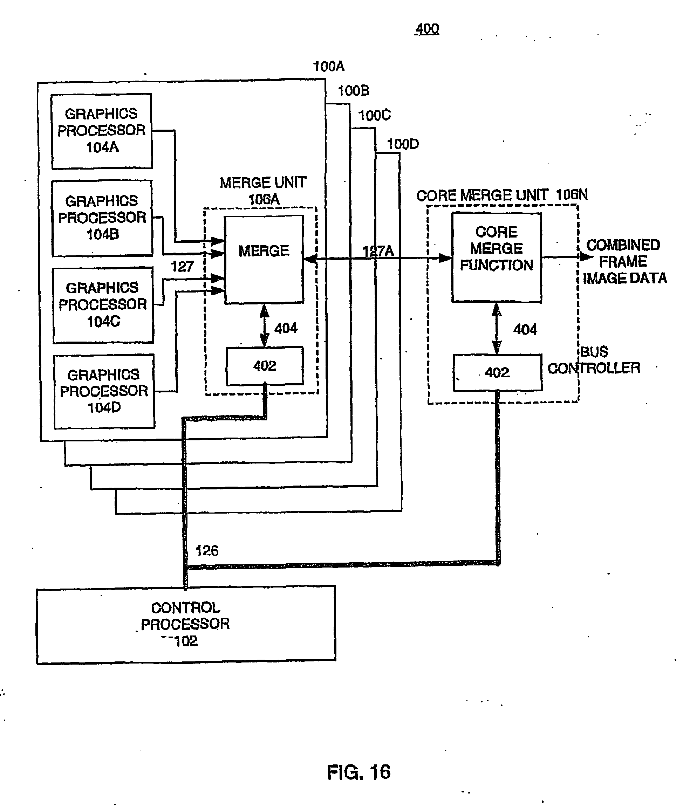

Reference is now made to FIG. 16, which is a block diagram illustrating an apparatus 400 suitable for use in accordance with one or more further aspects of the present invention. In many respects, the apparatus 400 is substantially similar to the apparatus 200 of FIG. 10. In particular, the apparatus 400 includes a control processor 102, a plurality of graphics apparatuses 100A-D, and a core merge unit 106N. Notably, the apparatus 400 does not require a core synchronization unit 108N as did the apparatus 200 of FIG. 10. The functionality of these functional and/or circuit blocks are substantially similar to those discussed hereinabove with respect to FIGS. 3 and 10 and, therefore, will not be repeated here.

The core merge unit 106N of apparatus 400 preferably includes a bus controller function 402 operatively coupled between the bus 126 and a control data bus 404, where the control data bus 404 communicates with the local merge units 106A-D and the core merge unit 106N. The local merge units 106A-D also preferably include a bus controller function 402. Although the bus controller functions 402 are shown as being implemented within the core merge unit 106N and within the local merge units 106A-D, it is understood that these functions may be separate from the core merge unit 106N and the local merge units 106A-D without departing from the scope of the invention. It is noted that the respective local merge units 106A-D are operatively coupled to the core merge unit 106N by way of the separate data lines 127A-D such that exclusive transmission of the local combined frame image data from the respective local merge units 106A-D to the core merge unit 106N is obtained.

As discussed hereinabove with respect to FIG. 9, the apparatus 400, like the apparatus 200, preferably operates according to the high level flow diagram of FIG. 9 such that one or more of the modes of operation (see FIGS. 4-7) may be carried out, preferably on a frame-by-frame basis. More particularly, the control processor 102 is preferably operable to transmit subsequent setup data to the respective apparatuses 100A-D on a frame-by-frame basis, where the setup data establishes the mode of operation of the graphics processors 104 and the merge units 106. The control processor 102 preferably communicates at least the instructions concerning the one or more modes of operation (i.e., the setup data) to the respective local merge units 106A-D and the core merge unit 106N by way of the bus controller functions 402 and the control data bus 404.

As discussed above with respect to apparatus 200 of FIG. 10 and apparatus 100 of FIG. 3, the core merge unit 106N is preferably operable to produce the merge synchronization signal 132 to facilitate synchronous release of the frame image data, the release of the local combined frame image data, and the production of the combined frame image data. The core merge unit 106N may transmit the merge synchronization signal 132 to the respective graphics processors 104 by way of the control data bus 404, and the data bus 126. In order to ensure that the merge synchronization signal 132 is transmitted quickly and received promptly by the apparatuses 100A-D, the bus controller function 402 is preferably operable to seize control of the data bus 126 upon receipt of the merge synchronization signal 132 over the control data bus 404 and transmit the merge synchronization signal 132 to the respective apparatuses 100A-D on a priority basis. Thus, the bus controller function 402 provides the function of a master bus controller. Alternately, the core merge unit 106N may transmit the merge synchronization signal 132 to the respective graphics processors 104 by way of the control data bus 404 and the local merge units 106A-D.

In accordance with the one or more aspects of the invention embodied in the apparatus 400 of FIG. 16, the advantageous elimination of separate control data lines between the control processor 102, the local merge units 106A-D and the core merge unit 106N in favor of a common control data bus 404 is achieved. Thus, scalability of the overall apparatus is simplified and freedom to partition the functional blocks of the apparatus in different ways is obtained.

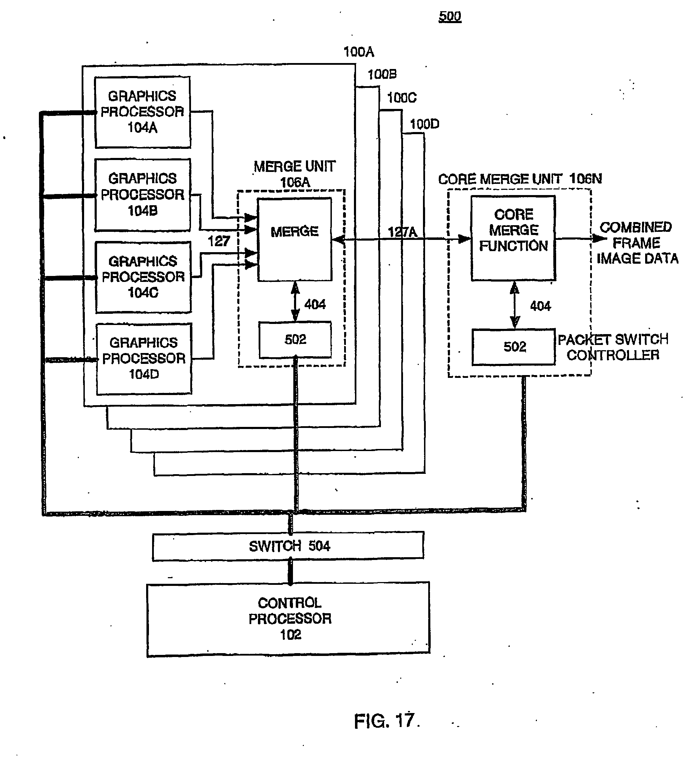

Reference is now made to FIG. 17, which is a block diagram illustrating an apparatus 500 suitable for use in accordance with one or more further aspects of the present invention. In many ways, the apparatus 500 of FIG. 17 is substantially similar to the apparatuses of FIGS. 10 and 16 as will be readily apparent to one skilled in the art when the common functional and/or circuit blocks are noted, such as the plurality of graphics processing apparatuses 100A-D, the plurality of graphics processors 104, the plurality of local merge units 106A-D, the core merge unit 106N, and the control processor 102. Accordingly, details concerning these functional and/or circuit blocks will be omitted for purposes of clarity.

The apparatus 500 is preferably operable to function using a "connectionless network" in which the data transmitted between certain functional and/or circuit blocks are routed over a packet-switched network. The data are organized into packets in accordance with a transmission control protocol (TCP) layer of the packet-switched network. Each packet includes an identification number identifying it as being associated with a particular group of packets and an address of the destination functional and/or circuit block on the packet-switched network. The TCP at the destination permits the reassembly of the packets into the original data.

Turning to the particular features of the apparatus 500, a packet switch 504 is operatively coupled to the control processor 102, the respective apparatuses 100A-D, the plurality of graphics processors 104, and one or more packet switch controller functions 502 within the core merge unit 106N and the respective local merge units 106A-D. It is noted that the packet switch controller functions 502 may be implemented separately from the core merge unit 106N and/or the local merge units 106A-D without departing from the scope of the invention. As the graphics processors 104 are coupled to the control processor 102 by way of the packet-switched network, the program data and the format data may be transmitted to the graphics processors 104 in packetized form. Thus, the one or more software application programs facilitating, for example, polygonal spatial transformation, 3D-2D conversion, magnification, reduction, rotation, lighting, shading, coloring, etc., may be transmitted to the graphics processors through the packet switch 504.

It is noted that certain interconnections between functional and/or circuit blocks of the apparatus 500 are not made by way of the packet-switched network. For example, the plurality of graphics processors 104 are coupled to the respective local merge units 106 by way of separate dedicated data lines 127. Similarly, the plurality of local merge units 106 are coupled to the core merge unit 106N by way of dedicated data lines 127A-D. Still further, the transfer of instructions from the control processor 102 to the local merge units 106A-D and the core merge unit 106N are at least in part transmitted over the common control bus 404 discussed above with respect to FIG. 16.

The control processor 102 is preferably operable to instruct the graphics processors 104, the local merge units 106A-D, and the core merge unit 106N to operate in the one or more modes of operation on a frame-by-frame basis as discussed in detail hereinabove with respect to other configurations of the invention. In particular, the control processor 102 preferably communicates instructions concerning the one or more modes of operation to the respective destination function and/or circuit blocks by way of the packet switch 504, the instructions having been packetized in accordance with the TCP layer. Further, the core merge unit 106N is preferably operable to produce the merge synchronization signal 132 as discussed in detail hereinabove. The core merge unit 106N may be operable to transmit the merge synchronization signal 132 to various destination functional and/or circuit blocks by way of the control data bus 404, the packet switch controller function 502, and the packet switch 504.

The packet switch controller function 504 may be capable of seizing control of the packet switch 504 when the core merge unit 106N transmits the merge synchronization signal 132 over the control data bus 404 such that the merge synchronization signal 132 may be promptly transmitted to the destination functional and/or circuit blocks. When the TCP layer is capable of transmitting very quickly and guarantees the routing of all packets of an instruction to any of the destination functional and/or circuit blocks within a given latency, then the packet switch controller 502 need not seize the packet switch 504. Rather, a design assumption may be made that the merge synchronization signal 132 will be received by the destination functional and/or circuit blocks (such as the graphics processors 104) within an acceptable tolerance. Alternately, the core merge unit 106N could transmit the merge synchronization signal 132 to the respective graphics processors 104 by way of the control data bus 404 and the local merge units 106A-D.

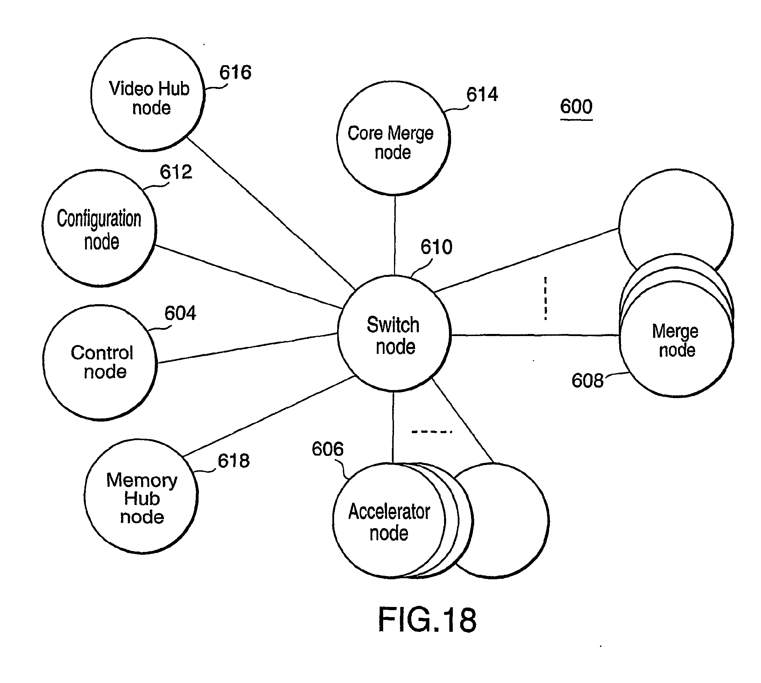

Reference is now made to FIG. 18, which is block diagram of an apparatus 600 for processing image data to produce an image on a display in accordance with one or more further aspects of the present invention. The apparatus 600 preferably includes a plurality of processing nodes 602, at least one of which is a control node 604, that are coupled together on a packet-switched network, such as a local area network (LAN). The packet-switched network (here a LAN) and an associated TCP layer is assumed to enjoy a data transmission rate (from source node to destination node) that is sufficiently high to support the synchronization schema discussed hereinabove to produce the image.

The control node 604 is preferably operable to select a subset of processing nodes from among the plurality of processing nodes 602 to participate in processing the image data to produce the image for display. The subset of processing nodes preferably includes at least one accelerator node 606, at least one merge node 608, at least one packet switch node 610, and at least one configuration node 612. The apparatus 600 may optionally include at least one core merge node 614, at least one video hub node 616, and at least one memory hub node 618.

The at least one accelerator node 606 preferably includes one or more of the graphics processors 104 discussed hereinabove with respect to at least FIGS. 3, 10, and 14-17. More particularly, the at least one accelerator node 606 preferably enjoys the functionality discussed hereinabove with respect to the one or more graphics processors 104, although a repeated detailed discussion of that functionality is omitted for purposes of simplicity. The at least one merge node 608 preferably includes at least one of the merge units 106 discussed hereinabove with respect to at least FIGS. 3, 10, and 14-17. Preferably, the at least one merge node 608 enjoys the functionality of the at least one merge node 106, although a repeated detailed description of that functionality is omitted for the purposes of simplicity. The control node 604 preferably includes the control processor 102 discussed hereinabove with respect to at least FIGS. 3, 10, and 14-17, although a detailed description of the control processor 102 is omitted for the purposes of simplicity. The packet switch node 610 is preferably operable to route the image data, frame image data, combined frame image data, any command instructions, and/or any other data among the plurality of processing nodes 602.

The plurality of processing nodes 602 represent resources that may be tapped to achieve the production of the image for display. As these resources are distributed over the package-switched network, it is desirable to engage in a process of selecting a subset of these resources to participate in the production of the image. Indeed, some of the resources may not be available to participate in producing the image, other resources may be available but may not have the requisite capabilities to participate in producing the image, etc.

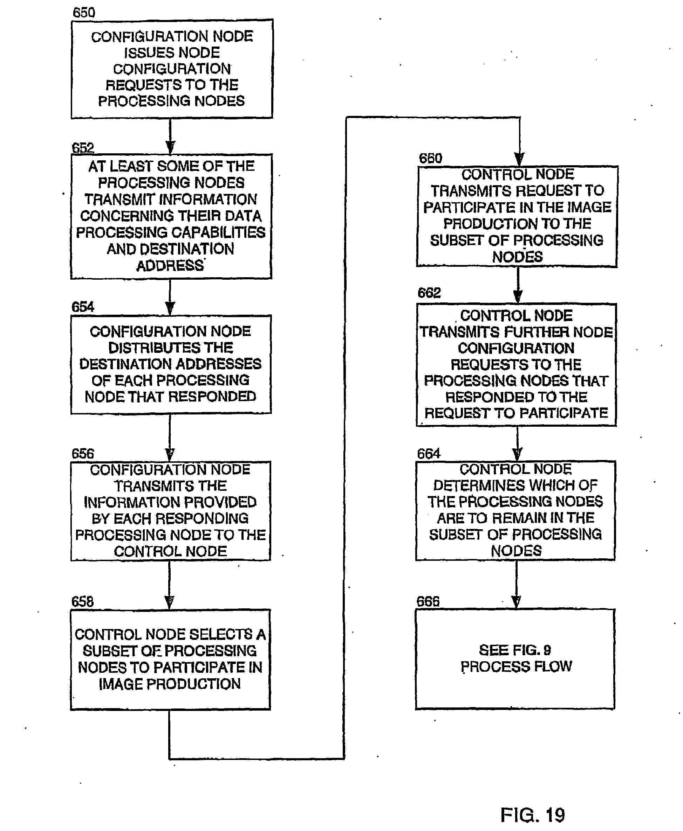

With reference to FIGS. 18 and 19, the configuration node 612 is preferably operable to issue one or more node configuration requests to the plurality of processing nodes 602 over the packet-switched network (action 650). These node configuration requests preferably prompt the processing nodes 602 to transmit at least some information concerning their data processing capabilities, their availability, their destination address, etc. More particularly, the information sought in terms of their data processing capability includes at least one (i) a rate at which the image data can be processed into frame image data (e.g., a capability of a graphics processor 104), (ii) a number of frame buffers available (e.g., a capability of a graphics processor 104), (iii) frame image data resolution (e.g., a capability of a graphics processor 104), (iv) an indication of respective modes of operation supported by the graphics processors of a given node, (v) a number of parallel paths into which respective frame image data may be input for merging into the combined frame image data (e.g., a capability of a merge node 608), (vi) an indication of respective modes of operation supported by a merge unit, (vii) memory size available for storing data (e.g., a capability of a memory hub node 618), (viii) memory access speed (e.g., a capability of a memory hub node 618), and (ix) memory throughput (e.g., a capability of a memory hub node 618). It is understood that the above list is given by way of example only and may not be exhaustive.

At action 652, at least some of the processing nodes 602 preferably transmit information concerning their data processing capabilities, their destination addresses and their availability to the configuration node 612 over the packet-switched network. The configuration node 612 is preferably further operable to distribute the received destination addresses to each processing node that responded to the node configuration requests (action 654).

At action 656, the configuration node 612 is preferably operable to transmit the information provided by each processing node 602 in response to the node configuration requests to the control node 604. At action 658, the control node is preferably operable to select the subset of processing nodes from among the processing nodes 602 that responded to the node configuration requests to participate in processing the image data to produce the image for display. This selection process is preferably based on the responses from the processing nodes 602 to the node configuration requests. At action 660, the control node 604 is preferably operable to transmit a request to participate in processing the image data to each of the subset of processing nodes 602, thereby promptly them to accept participation. The control node 604 is preferably further operable to transmit one or more further node configuration requests to one or more of the subset of processing nodes 602 that responded to the request to participate (action 662). Preferably, the further node configuration request includes at least a request for the node to provide information concerning a format in which the node expects to transmit and receive data, such as the image data, the frame image data, combined frame image data, processing instructions, etc.

At action 664, the control node is preferably operable to determine which of the processing nodes 602 are to be retained in the subset of processing nodes to participate in processing the image data. This determination is preferably based on at least one of the data processing capabilities, format information, availability, etc. provided by the processing nodes 602 in response to the node configuration requests. At action 660, the apparatus 600 preferably operates in substantial accordance with the process flow discussed hereinabove with respect to FIG. 9, particularly in terms of the use of the merge synchronization signal to synchronize the release of frame image data and combined frame image data to the one or more merge units 106 of the at least one merge node 608, it being understood that the flow of data between the graphics processors 104, merge units 106, control processor 102, synchronization units 108, etc. are facilitated over the packet-switched network. Moreover, the apparatus 600 of FIG. 18 is preferably operable to provide the requisite resources to implement any of the previously discussed apparatuses hereinabove, for example, apparatus 100 of FIG. 3, apparatus 200 of FIG. 10, apparatus 350 of FIG. 14, apparatus 360 of FIG. 15, apparatus 400 of FIG. 16, apparatus 500 of FIG. 17, or any combination thereof.

Advantageously, the apparatus 600 of FIG. 18 is easily modified to include substantially those resources necessary to achieve the desired quality of the image for display. Indeed, as accelerator 606, merge nodes 608, core merge nodes 614, video hub modes 616, memory hub nodes 618, etc. may be readily added or removed from the subset of processing nodes 602 participating in the production of the image, a desirable quantum of processing power may be achieved on a case-by-case basis, no matter what level of processing power is required.

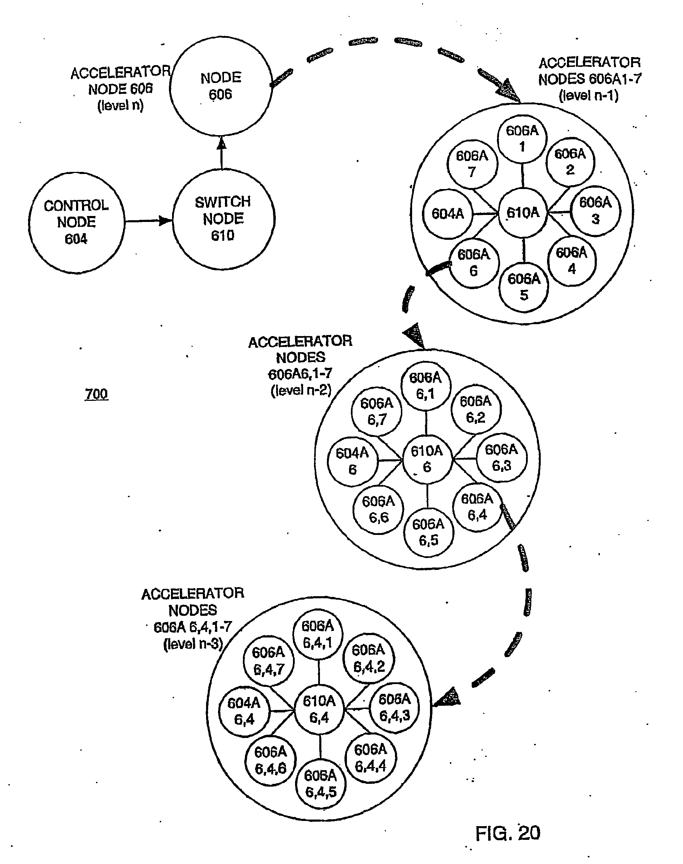

Reference is now made to FIG. 20, which is a block diagram of an apparatus 700 for processing image data to produce an image on a display. The apparatus 700 preferably includes substantially the same general configuration of processing nodes 602 as illustrated in FIG. 18. In particular, the apparatus 700 preferably includes the control node 604, the accelerator node 606, the merge node 608, the packet switch node 610, the configuration node 612 and optionally the core merge node 614, the video hub node 616, and the memory hub node 618 as shown in FIG. 18, where only certain of these nodes are shown in FIG. 20 for clarity. It is preferred that the apparatus 700 enjoys the functionality discussed hereinabove with respect to the apparatus 600 of FIG. 18 and the process flow of FIG. 19, although a repeated discussion concerning the details of these functions is omitted for the purposes of clarity.

It is preferred that the processing nodes of apparatus 700 are coupled together on an open packet-switched network, such as the Internet. The packet-switched network, preferably employs suitable hardware and a TCP layer that enjoys a data transmission rate (e.g., from source node to destination node) that is sufficiently high to support the synchronization schema discussed hereinabove to produce the image.

The apparatus 700 contemplates that the processing nodes are arranged in a hierarchy, where the one or more accelerator nodes 606 (only one such accelerator 606 being shown for simplicity) are coupled to the packet switch node 610 on an (n)th level. By extension, the control node 604, the merge nodes 608, 614 (not shown), the packet switch node 610, the configuration node 612 (not shown), the video hub node 616 (not shown), and the memory hub node 618 (not shown) are also on the (n)th level. At least one of the (n)th level accelerator nodes 606 preferably includes an (n-1)th level control node 604 and a plurality of (n-1)th level accelerator nodes 606 coupled together by way of an (n-1)th level packet switch node 610. As shown in FIG. 20, the (n)th level accelerator node 606 includes an (n-1)th level control node 604A, an (n-1)th level packet switch node 610A, and seven (n-1)th level accelerator nodes 606A1-7. Preferably, the (n)th level accelerator node 606 performs substantially the same functions in the aggregate as discussed hereinabove with respect to the at least one accelerator node 606 of FIG. 18, although it is contemplated that the (n)th level accelerator node 606 would enjoy a higher level of processing power inasmuch as it includes seven accelerator nodes 606A1-7, each including one or more graphics processors 104. Moreover, each of the (n-1)th level accelerator nodes 606A1-7 preferably enjoy the functionality of the accelerator nodes 606 discussed hereinabove with respect to FIG. 18 inasmuch as each one preferably includes one or more graphics processors 104, etc. Although seven (n-1)th level accelerator nodes 606A1-7 are illustrated, any number of such (n-1)th level accelerator nodes may be employed without departing from the scope of the invention.

Preferably, one or more of the (n-1)th level accelerator nodes 606A1-7, such as (n-1)th level accelerator node 606A6, includes an (n-2)th level control node 604A6 and a plurality of (n-2)th level accelerator nodes 606A6,1-m (where m may be any number, such as seven) coupled together by way of an (n-2)th level packet switch node 610A6. The (n-2)th level accelerator nodes 606A6,1-m enjoy the functionality discussed hereinabove with respect to the accelerator nodes 606 of FIG. 18. In accordance with the invention, the number of levels, n, may be any integer number.

Preferably, one or more of the (n-2)th level accelerator nodes 606A6,1-m, such as (n-2)th level accelerator node 606A6,4, includes an (n-3)th level control node 604A6,4 and a plurality of (n-3)th level accelerator nodes 606A6,4,1-m (where the number may be any number, such as seven) coupled together by way of an (n-3)th level packet switch node 610A6,4. The (n-3)th level accelerator nodes 606A6,4,1-m enjoy the functionality discussed hereinabove with respect to the accelerator nodes 606 of FIG. 18. In accordance with the invention, the number of levels, n, may be any integer number.

As was the case with the apparatus 600 of FIG. 18, the control nodes 604 are preferably operable to select a subset of processing nodes from among the plurality of processing nodes 602 to participate in processing the image data to produce the image for display (see discussion of FIG. 19 above). With the apparatus 700 of FIG. 20, the selection process results in a subset of processing nodes 602 that may include n levels.

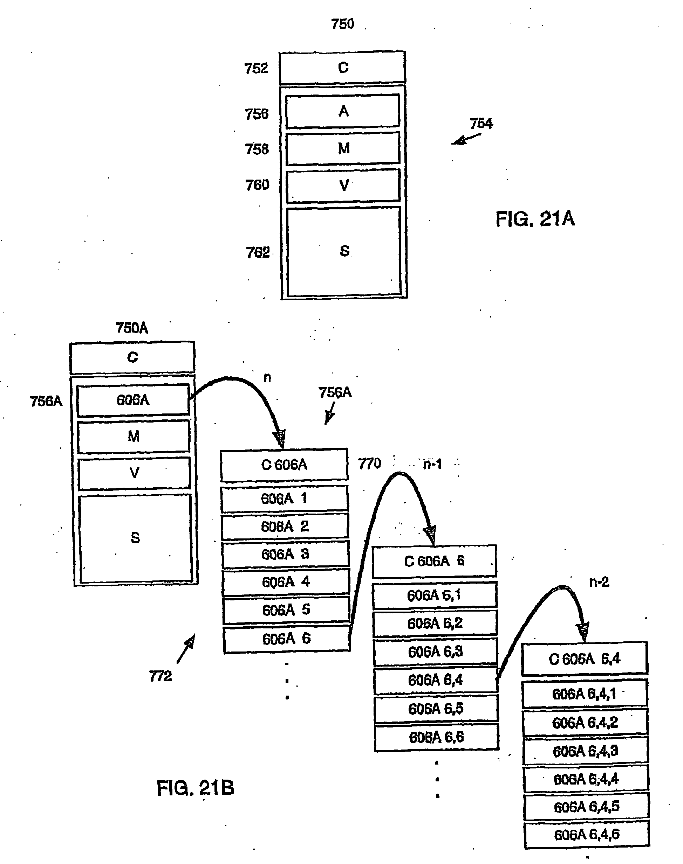

With reference to FIGS. 20 and 21A, once the selection of the subset of processing nodes 602 has been completed, the (n)th level control node 604 is preferably operable to transmit one or more (n)th level information sets 750 over the packet-switched network to one or more of the subset of processing nodes 602. The information sets 750 preferably include at least one of instructions and data used in the production of the image. For example, the instructions preferably include information concerning the one or more modes of operation in which the graphics processors 104, local merge units 106, core merge unit 108, etc. are to operate, preferably on a frame-by-frame basis as discussed hereinabove. The data may include texture data, video data (such as externally provided frames of image data to be combined to produce the final image), etc.

Each of the (n)th level information sets 750 preferably includes an (n)th level header 752 indicating at least that the given information set was issued from the (n)th level control nodes 604. The header 752 may also identify the information set as including instruction information, data, or a combination of both. The (n)th level information sets 750 also preferably include a plurality of (n)th level blocks 754, each block including information and/or data for one or more of the (n)th level nodes, such as an (n)th level accelerator node 756, an (n)th level merge node 758, an (n)th level video hub node 760, an (n)th level memory hub node 762, etc. The (n)th level switch node 610 is preferably operable to dissect the instructions set 750 such that the respective (n)th level information blocks 756-762 are routed to the respective (n)th level nodes.

With reference to FIG. 21B, one or more of the (n)th level information sets 750, such as information set 750A, may include an (n)th level information block for an (n)th level accelerator node, such as (n)th level information block 606A, that includes a plurality of (n-1)th level information sub-blocks 606A1-m. The (n)th level information block 756A also preferably includes a header 770 that indicates whether the information sub-blocks 772 contain instructions, data, etc.

Referring also to FIG. 20, the (n)th level switch node 610 is preferably operable to receive the information set 750A, dissect the (n)th level information block 756A for the (n)th level accelerator node 606 therefrom, and transmit the (n)th level information block 756A to the (n-1)th level control node 604A. The (n-1)th level control node 604A is preferably operable to transmit the respective (n-1)th information sub-blocks 772 of the (n)th level information block 756A to the (n-1)th level packet switch node 610A such that the respective (n-1)th level information sub-blocks 772 may be transmitted to the respective (n-1)th level accelerator nodes 606A1-m. This functionality and process is preferably repeated for each level of accelerator nodes.

The apparatus 700 is preferably operable to provide the requisite resources to implement any of the previously discussed apparatuses hereinabove. For example, apparatus 100 of FIG. 3, apparatus 200 of FIG. 10, apparatus 350 of FIG. 14, apparatus 360 of FIG. 15, apparatus 400 of FIG. 16, apparatus 500 of FIG. 17, apparatus 600 of FIG. 18, or any combination thereof.

Advantageously, the apparatus 700 of FIG. 20 is easily modified to include substantially those resources necessary to achieve the desired quality of the image for display. Indeed, as the number and level of processing nodes may be readily increased or decreased, a desirable quantum of processing power may be achieved on a case-by-case basis, no matter what level of processing power is required.

In accordance with at least one further aspect of the present invention, a method of processing image data to produce an image for display on a display screen may be achieved utilizing suitable hardware, such as that illustrated in FIGS. 3, 8, 10-18 and 20, and/or utilizing a manual or automatic process. An automatic process may be implemented utilizing any of the known processors that are operable to execute instructions of a software program. The software program preferably causes the processor (and/or any peripheral systems) to execute certain steps in accordance with one or more aspects of the present invention. In a manual process, the steps themselves would be performed using manual techniques. In either case, the steps and/or actions of the method preferably correspond with the functions discussed hereinabove with respect to at least portions of the hardware of FIGS. 3, 8, 10-18 and 20.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the appended claims.

## Claims

1. An apparatus for processing image data to produce an image for covering an image area of a display, the apparatus including subsets of a plurality of processing systems coupled together, the apparatus comprising:
at least one accelerator (606) including a plurality of sets of graphics processors, each graphics processor (104) being operable to render the image data into frame image data and to store the frame image data in a respective local frame buffer;
one or more merger including one or more merge units (106), the one or more merge units (106) including one or more local merge units (106A-106D) and a core merge unit (106N), a respective one of the local merge units (106A-106D) being associated with each set of graphics processors and being operable to synchronously receive the frame image data from the respective local frame buffers, which is formed by combining the frame image data, and to synchronously produce local combined frame image data based thereon, and the core merge unit (106N) being associated with each local merge unit and being operable to synchronously receive the local combined frame image data from the respective local merge units (106A-106D) and to synchronously produce the combined frame image data based thereon;
a control system including a control processor (102) operable to provide instructions to one of the subsets of processing systems, and operable to select the subset of processing system to participate in processing the image data to produce the image for display; and
at least one packet switch system (504) operable to switch data packets between one of the subsets to another subset, and operable to route the data for forming at least the frame image data, the formed frame image data, or combined frame image data;.
wherein the core merge unit (106N) is operable to produce a merge synchronization signal used by one of the graphics processors to release the frame image data from the respective local frame buffers to the local merge units (106A-106D), wherein the merge synchronization signal is synchronized in accordance with a display protocol defining how respective frames of the combined frame image data are to be displayed

2. The apparatus of claim 1, **characterized in that** in further comprises at least one configurator (612) operable to facilitate selecting the subset of processing system.

3. The apparatus of claim 2, **characterized in that** the processing systems, at least one accelerator (606), at least one merger, the control system, the switch system, and the configurator (612), are respectively recognized as a node on the network, to which it is connected, by the other nodes, and, performing an image processing, as a whole, by cooperation of a plurality of the nodes.

4. The apparatus of claim 2, **characterized in that** the configurator (612) is operable to issue one or more configuration requests to the plurality of processing systems, the one or more configuration requests prompting each processing systems to transmit at least some information concerning their data processing capabilities and their destination address to the configurator (612).

5. The apparatus of claim 4, **characterized in that** the at least some information concerning data processing capabilities includes at least one of a rate at which the image data can be processed into frame image data, a number of frame buffers available, frame image data resolution, an indication of respective modes of operation supported by the graphics processors, a number of parallel paths into which respective frame image data may be input for merging into the combined frame image data, an indication of respective modes of operation supported by the merge units (106), memory size available for storing data, memory access speed, and memory throughput.

6. The apparatus of claim 4, **characterized in that** the configurator (612) is further operable to transmit the destination addresses of substantially all of the processing systems that responded to the one or more configuration requests to each of the plurarity of processing systems.

7. The apparatus of claim 4, **characterized in that** the configurator (612) is further operable to transmit the information provided by each processing systems in response to the one or more configuration requests and the destination addresses of the control system which receives the one or more configuration requests.

8. The apparatus of claim 7, **characterized in that** at least one of the plurality of control systems is operable to select one or more subset from among the processing systems that responded to the one or more configuration requests to participate in processing the image data to produce the image for display based their responses to the one or more configuration requests.

9. The apparatus of claim 1, **characterized in that** it further comprises at least one video hub (352) operable to (i) receive at least one of a frame of the combined frame image data and at least one externally provided frame of frame image data, (ii) transmit at least one of the at least one externally provided frame of frame image data and the frame of the combined frame image data to at least one of the graphics processors such that one or more of the successive frames of frame image data a next frame of the combined frame image data may be based on the at least one of the at least one externally provided frame of frame image data and the frame of the combined frame image data.

10. The apparatus of claim 1, **characterized in that** the display protocol defines at least one of a frame rate at which successive frames of the combined frame image data are displayed, and a blanking period that dictates when the combined frame image data is to be refreshed.

11. The apparatus of claim 1, **characterized in that** the at least one externally provided frame of frame image data adheres to one of the display protocols and the merge synchronization signal is synchronized in accordance with that display protocol such that the core merge unit (106N) is operable to produce a subsequent frame of the combined frame image data based on the at least one externally provided frame of frame image data.

12. The apparatus of claim 9, **characterized in that** the memory hub node operable to (i) receive and store common image data, (ii) transmit the common image data to at least one of the graphics processors such that at least one of the successive frames of frame image data and a successive frame of the combined frame image data may include at least some of the common image data.

13. The apparatus of claim 12, **characterized in that** the common image data include texture data.

14. The apparatus of claim 1, **characterized in that**:
at least some of the accelerators (606) are grouped to form respective sets of the graphics processors;
at least some of the mergeers include respective local merge units (106A-106D) associated with the respective sets of the graphics processors such that the respective local merge units (106A-106D) are operable to synchronously receive the frame image data from the respective local frame buffers and to synchronously produce local combined frame image data based thereon; and
at least one of the processing systems includes a core merge unit (106N) operable to synchronously receive the local combined frame image data from the respective local merge units (106A-106D) and to synchronously produce the combined frame image data based thereon.

15. The apparatus of claim 14, **characterized in that** a (n)th level control system is operable to transmit (n)th level information sets network to one or more of the subset of processing nodes that at least one of (i) contain instructions, and (ii) contain various data used in the production of the image.

16. The apparatus of claim 1, **characterized in that** the core merge unit (106N) is operable to produce a merge synchronization signal used by at least some of the respective sets of graphics processors to synchronously release the frame image data from the respective local frame buffers to the respective local merge units (106A-106D), and to permit the respective local merge units (106A-106D) to synchronously release the local combined frame image data to the core merge unit (106N).

17. The apparatus of claim 16, **characterized in that** the merge synchronization signal is synchronized in accordance with a display protocol defining how respective frames of the combined frame image data are to be displayed.

18. The apparatus of claim 17, **characterized in that** the display protocol defines at least one of a frame rate at which successive frames of the combined frame image data are displayed, and a blanking period that dictates when the combined frame image data is to be refreshed.

19. The apparatus of claim 17, **characterized in that** the merge synchronization signal includes transitions that are proximate to ends of the blanking periods such that the at least one merge unit initiates producing the combined frame image data for display at the end of at least one of the blanking periods.

20. The apparatus of claim 19, **characterized in that** the transitions of the merge synchronization signal are substantially coincident with the ends of the blanking periods.

21. The apparatus of claim 16, **characterized in that** each of the graphics processors is further operable to render the image data into a respective one of the frame buffers asynchronously with respect to the merge synchronization signal.

22. The apparatus of claim 1, **characterized in that** the control processor (102) is operable to instruct one of the graphics processors and the one or more merge units (106) to operate in one or more modes that affect at least one of (i) timing relationships between when image data are rendered, when frame image data are released from respective local frame buffers, and when frame image data are merged; and (ii) how the frame image data are merged to synchronously produce the combined frame image data.

23. The apparatus of claim 22, **characterized in that** the control processor (102) is operable to instruct one of the graphics processors and the one or more merge units (106) to operate in the one or more modes on a frame-by-frame basis.

24. The apparatus of claim 22, **characterized in that** at least one of the modes provides that:
one or more of the graphics processors completes rendering the image data into the respective frame buffers prior to the end of blanking period;
one or more of the graphics processors (104) completes rendering the image data into the respective frame buffers prior to the end of an integral number of blanking periods; and
one or more of the graphics processors (104) includes an integral number of local frame buffers and that the one or more graphics processors (104) completes rendering the image data into the respective integral number of frame buffers prior to the ends of a corresponding integral number of blanking periods.

25. The apparatus of claim 22, **characterized in that** at least one of the modes is an area division mode providing that at least two of the local frame buffers are partitioned into respective rendering areas that correspond with respective portions of the image area and non-rendering areas, and an aggregate of the rendering areas results in a total rendering area that corresponds with all portions of the image area.

26. The apparatus of claim 22, **characterized in that** at least one of the modes is an averaging mode providing that the local frame buffers of at least two of the graphics processors (104) include rendering areas that each correspond with all portions of the image area and that the respective frame image data from the at least two local frame buffers are averaged to produce the combined frame image data.

27. The apparatus of claim 22, **characterized in that** at least one of the modes is a layer blending mode providing that: (i) at least some of the image data are rendered into the local frame buffers of at least two of the graphics processors such that each of these local frame buffers includes frame image data representing a portion of the combined frame image data; (ii) each of the portions of the combined frame image data are prioritized; and (iii) the one or more merge units (106) are further operable to synchronously produce the combined frame image data by layering each of the frame image data in an order according to the priority thereof.

28. The apparatus of claim 22, **characterized in that** at least one of the modes is a Z-sorting and layer blending mode providing that: (i) at least some of the image data are rendered into the local frame buffers of at least two of the graphics processors such that each of the at least two local frame buffers includes frame image data representing a portion of the combined frame image data; (ii) the frame image data include Z-values representing image depth; and (iii) the one or more merge units (106) are further operable to synchronously produce the combined frame image data by Z-sorting and layering each of the frame image data in accordance with the image depth.

29. The apparatus of claim 22, **characterized in that** at least one of the modes is a flip animation mode providing that: (i) the local frame buffers of at least two graphics processors include frame image data that are capable of covering the image area; and (ii) the one or more merge units (106) are further operable to produce the combined frame image data by sequentially releasing the respective frame image data from the at least two graphics processors.

30. The apparatus of claim 1, **characterized in that** it further comprises at least one video hub (352) operable to receive at least one of a frame of the combined frame image data and at least one externally provided frame of frame image data, the video hub (352) being operatively coupled to each of the plurality of graphics processors such that (i) at least one of the successive frames of frame image data from one or more of the graphics processors may include at least one of the at least one externally provided frame of frame image data and the frame of the combined frame image data, and (ii) one or more merge units (106) are operable to produce a successive frame of the combined frame image data based on the at least one of the at least one externally provided frame of frame image data and the frame of the combined frame image data.

31. The apparatus of claim 1, **characterized in that** it further comprises at least one memory hub operable to receive and store common image data, the at least one memory hub being operatively coupled to the plurality of graphics processors such that (i) at least one of the successive frames of frame image data from one or more of the graphics processors may include at least some of the common image data, and (ii) the one or more merge units (106) are operable to produce a successive frame of the combined frame image data based on the common image data.

32. A method for processing image data to produce an image for covering an image area of a display, the method being carried out using subsets of a plurality of processing systems coupled together, the method comprising:
selecting from among the plurality of processing systems at least one accelerator (606) including a plurality of sets of graphics processors, each graphics processor (104) being operable to render the image data into frame image data and to store the frame image data in a respective local frame buffer;
selecting from among the plurality of processing systems a plurality of local mergers including one or more local merge units (106A-106D), the one or more merge units (106) being operable to synchronously read the frame image data from the respective local frame buffers and to synchronously produce local combined frame image data based thereon,
selecting from among the plurality of processing systems one or more core merger including core merge unit (106N) operable to synchronously receive the local combined frame image data and to synchronously produce the combined frame image data based thereon;
establishing a control system including a control processor (102) operable to provide instructions to the subset of other processing system and operable to select the subset to participate in processing the image data to produce the image for display; and
employing data switch system operable to form group data by grouping one of the image data, frame image data, and combined frame image data, for enabling switching of the group data among the subsets,
wherein the core merge unit (106N) is operated to produce a merge synchronization signal used by one of the graphics processors to release the frame image data from the respective local frame buffers to the local merge units (106A-106D), wherein the merge synchronization signal is synchronized in accordance with a display protocol defining how respective frames of the combined frame image data are to be displayed.

33. The method of claim 32, **characterized in that** it further comprises issuing one or more configuration requests to the plurality of processing systems,
the one or more configuration requests prompting each processing system to transmit at least some information concerning their data processing capabilities and their destination address to the configuratior which performs data configuration.

34. The method of claim 32, **characterized in that** it further comprises connecting the processing systems, at least one accelerator (606), at least one merger, the control system, the switch system, and the configurator (612) respectively on the network so as to obtain recognition as a node on the network for each system in other nodes, and performing an image processing, as a whole, by cooperation of a plurality of the nodes.

35. The method of claim 32, **characterized in that** the at least some information concerning data processing capabilities includes at least one of a rate at which the image data can be processed into frame image data, a number of frame buffers available, frame image data resolution, an indication of respective modes of operation supported by the graphics processors, a number of parallel paths into which respective frame image data may be input for merging into the combined frame image data, an indication of respective modes of operation supported by the merge units (106), memory size available for storing data to be transmit, memory access speed, and memory throughput.

36. The method of claim 33, **characterized in that** it further comprises transmitting the destination addresses of substantially all of the processing systems that responded to the one or more configuration requests to each of those processing systems.

37. The method of claim 33, **characterized in that** it further comprises transmitting the information provided by each processing system in response to the one or more configuration requests and the destination addresses for the control system operable to control the request.

38. The method of claim 37, **characterized in that** it further comprises selecting one or more subset of processing systems from among the processing systems that responded to the one or more configuration requests to participate in processing the image data to produce the image for display based their responses to the one or more configuration requests.

39. The method of claim 32, **characterized in that** in further comprises selecting from among the plurality of processing systems at least one video hub (352) operable to (i) receive at least one of a frame of the combined frame image data and at least one externally provided frame of frame image data, (ii) transmit at least one of the at least one externally provided frame of frame image data and the frame of the combined frame image data to at least one of the graphics processors such that one or more of the successive frames of frame image data a next frame of the combined frame image data may be based on the at least one of the at least one externally provided frame of frame image data and the frame of the combined frame image data.

40. The method of claim 32, **characterized in that** it further comprises selecting from among the plurality of processing nodes at least one memory hub operable to (i) receive and store common image data, (ii) transmit the common image data to at least one of the graphics processors such that at least one of the successive frames of frame image data and a successive frame of the combined frame image data may include at least some of the common image data.

41. The method of claim 32, **characterized in that** it further comprises establishing a hierarchy among the subset of processing nodes such that;
the subset of the processing systems are hierarchized into a plurality of levels,
the control system is an (n)th level control system,
the at least one merger is an (n)th level merger,
the data switch system is an (n)th level data switch system, and at least one accelerator (606) is an (n)th level accelerator that includes an (n-1)th level control system and a plurality of (n-1)th level accelerator coupled together by way of an (n-1)th level data switch system.

42. The method of claim 41, **characterized in that** it further comprises transmitting (n)th level information sets to one or more of the subset that at least one of (i) contain instructions, and (ii) contain various data used in the production of the image.

43. The method of claim 42, **characterized in that** the instructions include information that causes the graphics processors, the local merge units (106A-106D), and the core merge unit (106N) to operate in one or more modes that affect at least one of (i) timing relationships between when image data are rendered, when frame image data are released from respective local frame buffers, and when frame image data are merged; and (ii) how the frame image data are merged to synchronously produce the combined frame image data.

44. The method of claim 42, **characterized in that** the various data used in the production of the image includes at least one of texture data, video data, and an externally provided frame of frame image data.

45. The method of claim 42, **characterized in that** each of the (n)th level information sets includes (i) an (n)th level header indicating that the given information set was issued from the (n)th level control system; (ii) a plurality of (n)th level information blocks, each including information for one or more of the (n)th level system.

46. The method of claim 45, **characterized in that** at least one of the plurality of (n)th level information blocks includes information for the (n)th level accelerator, and routing the plurality of (n)th level information blocks to the respective (n)th level systems.

47. The method of claim 46, **characterized in that** the (n)th level information block for the (n)th level accelerator includes a plurality of respective (n-1)th information sub-blocks for the respective (n-1)th systems, and
further comprising routing the plurality of (n-1)th level information sub-blocks to the respective (n-1)th level systems.

## Patentansprüche

1. Vorrichtung zum Verarbeiten von Bilddaten zum Erzeugen eines Bilds zum Abdecken eines Bildbereichs einer Anzeige, wobei die Vorrichtung Teilmengen mehrerer Verarbeitungssysteme umfasst, die miteinander gekoppelt sind, wobei die Vorrichtung umfasst:
zumindest eine Beschleunigungseinrichtung (606) mit mehreren Sätzen von Graphikprozessoren, wobei jeder Graphikprozessor (104) dazu dient, die Bilddaten in Frame-Bilddaten zu rendem und die Frame-Bilddaten in einem jeweiligen lokalen Frame-Puffer zu speichern;
eine oder mehrere Vereinigungseinrichtungen mit einer oder mehreren Vereinigungseinheiten (106), wobei die eine oder die mehreren Vereinigungseinheiten (106) eine oder mehrere lokale Vereinigungseinheiten (106A - 106D) und eine Kernvereinigungseinheit (106N) umfassen, wobei eine jeweilige der lokalen Vereinigungseinheiten (106A - 106D) mit jedem Satz von Graphikprozessoren in Verbindung steht und dazu dient, die Frame-Bilddaten synchron von den jeweiligen lokalen Frame-Puffern zu empfangen, was durch Kombinieren der Frame-Bilddaten erfolgt, und synchron lokale kombinierte Frame-Bilddaten auf der Grundlage davon zu erzeugen, und wobei die Kernvereinigungseinheit (106N) mit jeder lokalen Vereinigungseinheit in Verbindung steht und dazu dient, die lokalen kombinierten Frame-Bilddaten synchron von den jeweiligen lokalen Vereinigungseinheiten (106A - 106D) zu empfangen und synchron die kombinierten Frame-Bilddaten auf der Grundlage davon zu erzeugen;
ein Steuersystem mit einem Steuerprozessor (102), der dazu dient,
Anweisungen an eine der Teilmengen von Verarbeitungssystemen zu liefern, und dazu dient, die Teilmenge eines Verarbeitungssystems auszuwählen, um an der Verarbeitung der Bilddaten teilzunehmen, um das Bild für eine Anzeige zu erzeugen; und
zumindest ein Paketvermittlungssystem (504), das dazu dient, Datenpakete zwischen einer der Teilmengen und einer anderen Teilmenge zu vermitteln, und dazu dient, die Daten weiterzuleiten, um zumindest die Frame-Bilddaten, die gebildeten Frame-Bilddaten oder kombinierte Frame-Bilddaten zu bilden;
wobei die Kernvereinigungseinheit (106N) dazu dient, ein Vereinigungssynchronisationssignal zu erzeugen, das durch einen der Graphikprozessoren verwendet wird, um die Frame-Bilddaten von den jeweiligen lokalen Frame-Puffern für die lokalen Vereinigungseinheiten (106A - 106D) abzurufen, wobei das Vereinigungssynchronisationssignal gemäß einem Anzeigeprotokoll synchronisiert wird, das definiert, wie jeweilige Frames der kombinierten Frame-Bilddaten angezeigt werden sollen.

2. Vorrichtung nach Anspruch 1,
ferner **gekennzeichnet durch** zumindest eine Konfigurationseinrichtung (612), die dazu dient, das Auswählen der Teilmenge eines Verarbeitungssystems zu ermöglichen.

3. Vorrichtung nach Anspruch 2,
**dadurch gekennzeichnet, dass** die Verarbeitungssysteme, zumindest eine Beschleunigungseinrichtung (606), zumindest eine Vereinigungseinrichtung, das Steuersystem, das Vermittlungssystem und die Konfigurationseinrichtung (612) jeweils als Knoten an dem Netz, mit dem sie verbunden sind, durch die anderen Knoten erkannt werden, und wobei eine Bildverarbeitung in der Gesamtheit durch Kooperation mehrerer der Knoten durchgeführt wird.

4. Vorrichtung nach Anspruch 2,
**dadurch gekennzeichnet, dass** die Konfigurationseinrichtung (612) dazu dient, eine oder mehrere Konfigurationsanforderungen an die mehreren Verarbeitungssysteme auszugeben, wobei die eine oder die mehreren Konfigurationsanforderungen jedes Verarbeitungssystem auffordern, zumindest eine Information bezüglich ihrer Datenverarbeitungsfähigkeiten und ihrer Zieladresse an die Konfigurationseinrichtung (612) zu übertragen.

5. Vorrichtung nach Anspruch 4,
**dadurch gekennzeichnet, dass** die zumindest eine Information bezüglich der Datenverarbeitungsfähigkeiten eine Rate, mit der die Bilddaten zu Frame-Bilddaten verarbeitet werden können, und/oder eine Anzahl von verfügbaren Frame-Puffern und/oder eine Frame-Bilddatenauflösung und/oder eine Angabe jeweiliger Betriebsmodi, die durch die Graphikprozessoren unterstützt werden, und/oder eine Anzahl von parallelen Pfaden, auf denen jeweilige Frame-Bilddaten für ein Vereinigen zu den kombinierten Frame-Bilddaten eingegeben werden können, und/oder eine Angabe jeweiliger Betriebsmodi, die durch die Vereinigungseinheiten (106) unterstützt werden, und/oder eine Speichergröße, die zum Speichern von Daten zur Verfügung steht, und/oder eine Speicherzugriffsgeschwindigkeit und/oder einen Speicherdurchsatz umfasst.

6. Vorrichtung nach Anspruch 4,
**dadurch gekennzeichnet, dass** die Konfigurationseinrichtung (612) ferner dazu dient, die Zieladressen von im Wesentlichen allen der Verarbeitungssysteme, die auf die eine oder die mehreren Konfigurationsanforderungen reagierten, an jedes der mehreren Verarbeitungssysteme zu übertragen.

7. Vorrichtung nach Anspruch 4,
**dadurch gekennzeichnet, dass** die Konfigurationseinrichtung (612) ferner dazu dient, die durch jedes Verarbeitungssystem in Ansprechen auf die eine oder die mehreren Konfigurationsanforderungen bereitgestellte Information und die Zieladressen des Steuersystems, das die eine oder die mehreren Konfigurationsanforderungen empfängt, zu übertragen.

8. Vorrichtung nach Anspruch 7,
**dadurch gekennzeichnet, dass** zumindest eines der mehreren Steuersysteme dazu dient, eine oder mehrere Teilmengen aus den Verarbeitungssystemen auszuwählen, die auf die eine oder die mehreren Konfigurationsanforderungen reagierten, um an der Verarbeitung der Bilddaten teilzunehmen, um das Bild für eine Anzeige zu erzeugen, und zwar basierend auf ihren Reaktionen auf die eine oder die mehreren Konfigurationsanforderungen.

9. Vorrichtung nach Anspruch 1,
**dadurch gekennzeichnet, dass** sie ferner zumindest einen Video-Hub (352) umfasst, der dazu dient, (i) einen Frame der kombinierten Frame-Bilddaten und/oder zumindest einen extern bereitgestellten Frame von Frame-Bilddaten zu empfangen, (ii) den zumindest einen extern bereitgestellten Frame von Frame-Bilddaten und/oder den Frame der kombinierten Frame-Bilddaten an zumindest einen der Graphikprozessoren zu übertragen, sodass einer oder mehrere der nachfolgenden Frames von Frame-Bilddaten ein nächster Frame der kombinierten Frame-Bilddaten auf dem zumindest einen extern bereitgestellten Frame von Frame-Bilddaten und/oder dem Frame der kombinierten Frame-Bilddaten basieren kann.

10. Vorrichtung nach Anspruch 1,
**dadurch gekennzeichnet, dass** das Anzeigeprotokoll eine Frame-Rate, mit der nachfolgende Frames der kombinierten Frame-Bilddaten angezeigt werden, und/oder eine Ausblendungsperiode, die vorgibt, wann die kombinierten Frame-Bilddaten aktualisiert werden sollen, definiert.

11. Vorrichtung nach Anspruch 1,
**dadurch gekennzeichnet, dass** der zumindest eine extern bereitgestellte Frame von Frame-Bilddaten an eines der Anzeigeprotokolle gebunden ist, und das Vereinigungssynchronisationssignal gemäß diesem Anzeigeprotokoll synchronisiert wird, sodass die Kernvereinigungseinheit (106N) dazu dient, einen darauffolgenden Frame der kombinierten Frame-Bilddaten auf der Grundlage des zumindest einen extern bereitgestellten Frames von Frame-Bilddaten zu erzeugen.

12. Vorrichtung nach Anspruch 9,
**dadurch gekennzeichnet, dass** der Speicher-Hub-Knoten dazu dient, (i) allgemeine Bilddaten zu empfangen und zu speichern, (ii) die allgemeinen Bilddaten an zumindest einen der Graphikprozessoren zu übertragen, sodass die nachfolgenden Frames von Frame-Bilddaten und/oder ein nachfolgender Frame der kombinierten Frame-Bilddaten zumindest einige der allgemeinen Bilddaten umfassen können.

13. Vorrichtung nach Anspruch 12,
**dadurch gekennzeichnet, dass** die allgemeinen Bilddaten Texturdaten umfassen.

14. Vorrichtung nach Anspruch 1,
**dadurch gekennzeichnet, dass:**
zumindest einige der Beschleunigungseinrichtungen (606) gruppiert sind, um jeweilige Sätze der Graphikprozessoren zu bilden;
zumindest einige der Vereinigungseinrichtungen jeweilige lokale Vereinigungseinheiten (106A - 106D) umfassen, die mit den jeweiligen Sätzen der Graphikprozessoren in Verbindung stehen, sodass die jeweiligen lokalen Vereinigungseinheiten (106A - 106D) dazu dienen, die Frame-Bilddaten synchron von den jeweiligen lokalen Frame-Puffern zu empfangen, und synchron lokale kombinierte Frame-Bilddaten auf der Grundlage davon zu erzeugen; und
zumindest eines der Verarbeitungssysteme eine Kernvereinigungseinheit (106N) umfasst, die dazu dient, die lokalen kombinierten Frame-Bilddaten synchron von den jeweiligen lokalen Vereinigungseinheiten (106A - 106D) zu empfangen, und synchron die kombinierten Frame-Bilddaten auf der Grundlage davon zu erzeugen.

15. Vorrichtung nach Anspruch 14,
**dadurch gekennzeichnet, dass** ein Steuersystem der (n)-ten Ebene dazu dient, Informationssätze der (n)-ten Ebene Netz an einen oder mehrere der Teilmenge von Verarbeitungsknoten zu übertragen, die (i) Anweisungen enthalten und/oder (ii) verschiedene Daten enthalten, die bei der Erzeugung des Bilds verwendet werden.

16. Vorrichtung nach Anspruch 1,
**dadurch gekennzeichnet, dass** die Kernvereinigungseinheit (106N) dazu dient, ein Vereinigungssynchronisationssignal zu erzeugen, das durch zumindest einige der jeweiligen Sätze von Graphikprozessoren verwendet wird, um die Frame-Bilddaten von den jeweiligen lokalen Frame-Puffern für die jeweiligen lokalen Vereinigungseinheiten (106A - 106D) synchron abzurufen, und um den jeweiligen lokalen Vereinigungseinheiten (106A - 106D) zu ermöglichen, die lokalen kombinierten Frame-Bilddaten für die Kernvereinigungseinheit (106N) synchron abzurufen.

17. Vorrichtung nach Anspruch 16,
**dadurch gekennzeichnet, dass** das Vereinigungssynchronisationssignal gemäß einem Anzeigeprotokoll synchronisiert ist, das definiert, wie jeweilige Frames der kombinierten Frame-Bilddaten angezeigt werden sollen.

18. Vorrichtung nach Anspruch 17,
**dadurch gekennzeichnet, dass** das Anzeigeprotokoll eine Frame-Rate, mit der nachfolgende Frames der kombinierten Frame-Bilddaten angezeigt werden, und/oder eine Ausblendungsperiode, die vorgibt, wann die kombinierten Frame-Bilddaten aktualisiert werden sollen, definiert.

19. Vorrichtung nach Anspruch 17,
**dadurch gekennzeichnet, dass** das Vereinigungssynchronisationssignal Übergänge umfasst, die nahe an Enden der Ausblendungsperioden liegen, sodass die zumindest eine Vereinigungseinheit das Erzeugen der kombinierten Frame-Bilddaten für eine Anzeige am Ende von zumindest einer der Ausblendungsperioden initiiert.

20. Vorrichtung nach Anspruch 19,
**dadurch gekennzeichnet, dass** die Übergänge des Vereinigungssynchronisationssignals im Wesentlichen mit den Enden der Ausblendungsperioden zusammenfallen.

21. Vorrichtung nach Anspruch 16,
**dadurch gekennzeichnet, dass** jeder der Graphikprozessoren ferner dazu dient, die Bilddaten asynchron in Bezug auf das Vereinigungssynchronisationssignal in einen jeweiligen der Frame-Puffer zu rendern.

22. Vorrichtung nach Anspruch 1,
**dadurch gekennzeichnet, dass** der Steuerprozessor (102) dazu dient, einen der Graphikprozessoren und die eine oder die mehreren Vereinigungseinheiten (106) anzuweisen, in einem oder mehreren Modi zu arbeiten, die zumindest eines der folgenden beeinflussen: (i) Timing-Beziehungen zwischen dem Rendern von Bilddaten, dem Abrufen von Frame-Bilddaten von jeweiligen lokalen Frame-Puffern und dem Vereinigen von Frame-Bilddaten; und (ii) wie die Frame-Bilddaten vereinigt werden, um synchron die kombinierten Frame-Bilddaten zu erzeugen.

23. Vorrichtung nach Anspruch 22,
**dadurch gekennzeichnet, dass** der Steuerprozessor (102) dazu dient, einen der Graphikprozessoren und die eine oder die mehreren Vereinigungseinheiten (106) anzuweisen, in dem einen oder den mehreren Modi auf einer Frame-für-Frame-Basis zu arbeiten.

24. Vorrichtung nach Anspruch 22,
**dadurch gekennzeichnet, dass** zumindest einer der Modi umfasst, dass:
einer oder mehrere der Graphikprozessoren das Rendern der Bilddaten in die jeweiligen Frame-Puffer vor dem Ende der Ausblendungsperiode abschließen;
einer oder mehrere der Graphikprozessoren (104) das Rendern der Bilddaten in die jeweiligen Frame-Puffer vor dem Ende einer ganzen Zahl von Ausblendungsperioden abschließen; und
einer oder mehrere der Graphikprozessoren (104) eine ganze Zahl von lokalen Frame-Puffern umfassen, und dass der eine oder die mehreren Graphikprozessoren (104) das Rendern der Bilddaten in die jeweilige ganze Zahl von Frame-Puffern vor den Enden einer entsprechenden ganzen Zahl von Ausblendungsperioden abschließen.

25. Vorrichtung nach Anspruch 22,
**dadurch gekennzeichnet, dass** zumindest einer der Modi ein Bereichsteilungsmodus ist, der umfasst, dass zumindest zwei der lokalen Frame-Puffer in jeweilige Render-Bereiche, die jeweiligen Abschnitten des Bildbereichs entsprechen, und Nicht-Render-Bereiche aufgeteilt werden, und eine Gesamtsumme der Render-Bereiche zu einem Gesamt-Render-Bereich führt, der allen Abschnitten des Bildbereichs entspricht.

26. Vorrichtung nach Anspruch 22,
**dadurch gekennzeichnet, dass** zumindest einer der Modi ein Mittelwertbildungsmodus ist, der umfasst, dass die lokalen Frame-Puffer von zumindest zwei der Graphikprozessoren (104) Render-Bereiche umfassen, die jeweils allen Abschnitten des Bildbereichs entsprechen, und dass die jeweiligen Frame-Bilddaten von den zumindest zwei lokalen Frame-Puffern gemittelt werden, um die kombinierten Frame-Bilddaten zu erzeugen.

27. Vorrichtung nach Anspruch 22,
**dadurch gekennzeichnet, dass** zumindest einer der Modi ein Schichtausblendungsmodus ist, der umfasst, dass: (i) zumindest einige der Bilddaten in die lokalen Frame-Puffer von zumindest zwei der Graphikprozessoren gerendert werden, sodass jeder dieser lokalen Frame-Puffer Frame-Bilddaten umfasst, die einen Abschnitt der kombinierten Frame-Bilddaten darstellen; (ii) jeder der Abschnitte der kombinierten Frame-Bilddaten priorisiert wird; und (iii) die eine oder die mehreren Vereinigungseinheiten (106) ferner dazu dienen, die kombinierten Frame-Bilddaten synchron zu erzeugen, indem alle Frame-Bilddaten in einer Reihenfolge gemäß der Priorität dieser überlagert werden.

28. Vorrichtung nach Anspruch 22,
**dadurch gekennzeichnet, dass** zumindest einer der Modi ein Z-Sortierungs- und Schichtausblendungsmodus ist, der umfasst, dass: (i) zumindest einige der Bilddaten in die lokalen Frame-Puffer von zumindest zwei der Graphikprozessoren gerendert werden, sodass jeder der zumindest zwei lokalen Frame-Puffer Frame-Bilddaten umfasst, die einen Abschnitt der kombinierten Frame-Bilddaten darstellen; (ii) die Frame-Bilddaten Z-Werte umfassen, die die Bildtiefe darstellen; und (iii) die eine oder die mehreren Vereinigungseinheiten (106) ferner dazu dienen, die kombinierten Frame-Bilddaten durch Z-Sortieren und Überlagern aller Frame-Bilddaten gemäß der Bildtiefe synchron zu erzeugen.

29. Vorrichtung nach Anspruch 22,
**dadurch gekennzeichnet, dass** zumindest einer der Modi ein Flip-Animationsmodus ist, der umfasst, dass: (i) die lokalen Frame-Puffer von zumindest zwei Graphikprozessoren Frame-Bilddaten umfassen, die den Bildbereich abdecken können; und (ii) die eine oder die mehreren Vereinigungseinheiten (106) ferner dazu dienen, die kombinierten Frame-Bilddaten zu erzeugen, indem sequentiell die jeweiligen Frame-Bilddaten von den zumindest zwei Graphikprozessoren abgerufen werden.

30. Vorrichtung nach Anspruch 1,
**dadurch gekennzeichnet, dass** sie ferner zumindest einen Video-Hub (352) umfasst, der dazu dient, einen Frame der kombinierten Frame-Bilddaten und/oder zumindest einen extern bereitgestellten Frame von Frame-Bilddaten zu empfangen, wobei der Video-Hub (352) funktional mit jedem der mehreren Graphikprozessoren gekoppelt ist, sodass (i) zumindest einer der nachfolgenden Frames von Frame-Bilddaten von einem oder mehreren der Graphikprozessoren den zumindest einen extern bereitgestellten Frame von Frame-Bilddaten und/oder den Frame der kombinierten Frame-Bilddaten umfassen kann, und (ii) eine oder mehrere Vereinigungseinheiten (106) dazu dienen, einen nachfolgenden Frame der kombinierten Frame-Bilddaten auf der Grundlage des zumindest einen extern bereitgestellten Frames von Frame-Bilddaten und/oder des Frames der kombinierten Frame-Bilddaten zu erzeugen.

31. Vorrichtung nach Anspruch 1,
**dadurch gekennzeichnet, dass** sie ferner zumindest einen Speicher-Hub umfasst, der dazu dient, allgemeine Bilddaten zu empfangen und zu speichern, wobei der zumindest eine Speicher-Hub funktional mit den mehreren Graphikprozessoren gekoppelt ist, sodass (i) zumindest einer der nachfolgenden Frames von Frame-Bilddaten von einem oder mehreren der Graphikprozessoren zumindest einige der allgemeinen Bilddaten umfassen kann, und (ii) die eine oder die mehreren Vereinigungseinheiten (106) dazu dienen, einen nachfolgenden Frame der kombinierten Frame-Bilddaten auf der Grundlage der allgemeinen Bilddaten zu erzeugen.

32. Verfahren zum Verarbeiten von Bilddaten zum Erzeugen eines Bilds zum Abdecken eines Bildbereichs einer Anzeige, wobei das Verfahren unter Verwendung von Teilmengen mehrerer Verarbeitungssysteme, die miteinander gekoppelt sind, ausgeführt wird, wobei das Verfahren umfasst, dass:
aus den mehreren Verarbeitungssystemen zumindest eine Beschleunigungseinrichtung (606) ausgewählt wird, die mehrere Sätze von Graphikprozessoren umfasst, wobei jeder Graphikprozessor (104) dazu dient, die Bilddaten in Frame-Bilddaten zu rendern und die Frame-Bilddaten in einem jeweiligen lokalen Frame-Puffer zu speichern;
aus den mehreren Verarbeitungssystemen mehrere lokale Vereinigungseinrichtungen ausgewählt werden, die eine oder mehrere lokale Vereinigungseinheiten (106A - 106D) umfassen, wobei die eine oder die mehreren Vereinigungseinheiten (106) dazu dienen, die Frame-Bilddaten synchron von den jeweiligen lokalen Frame-Puffern zu lesen, und synchron lokale kombinierte Frame-Bilddaten auf der Grundlage davon zu erzeugen,
aus den mehreren Verarbeitungssystemen eine oder mehrere Kernvereinigungseinrichtungen ausgewählt werden, die eine Kernvereinigungseinheit (106N) umfassen, die dazu dient, synchron die lokalen kombinierten Frame-Bilddaten zu empfangen und synchron die kombinierten Frame-Bilddaten auf der Grundlage davon zu erzeugen;
ein Steuersystem hergestellt wird, das einen Steuerprozessor (102) umfasst, der dazu dient, Anweisungen an die Teilmenge eines anderen Verarbeitungssystems zu liefern, und dazu dient, die Teilmenge auszuwählen, um an der Verarbeitung der Bilddaten teilzunehmen, um das Bild für eine Anzeige zu erzeugen; und
ein Datenvermittlungssystem eingesetzt wird, das dazu dient, Gruppendaten zu bilden, indem die Bilddaten oder Frame-Bilddaten oder kombinierten Frame-Bilddaten gruppiert werden, um ein Vermitteln der Gruppendaten unter den Teilmengen zu ermöglichen,
wobei die Kernvereinigungseinheit (106N) betrieben wird, um ein Vereinigungssynchronisationssignal zu erzeugen, das durch einen der Graphikprozessoren verwendet wird, um die Frame-Bilddaten von den jeweiligen lokalen Frame-Puffern für die lokalen Vereinigungseinheiten (106A - 106D) abzurufen, wobei das Vereinigungssynchronisationssignal gemäß einem Anzeigeprotokoll synchronisiert wird, das definiert, wie jeweilige Frames der kombinierten Frame-Bilddaten angezeigt werden sollen.

33. Verfahren nach Anspruch 32,
**dadurch gekennzeichnet, dass** es ferner umfasst, dass eine oder mehrere Konfigurationsanforderungen an die mehreren Verarbeitungssysteme ausgegeben werden, wobei die eine oder die mehreren Konfigurationsanforderungen jedes Verarbeitungssystem auffordern, zumindest eine Information bezüglich ihrer Datenverarbeitungsfähigkeiten und ihrer Zieladresse an die Konfigurationseinrichtung zu übertragen, die eine Datenkonfiguration durchführt.

34. Verfahren nach Anspruch 32,
**dadurch gekennzeichnet, dass** es ferner umfasst, dass die Verarbeitungssysteme, zumindest eine Beschleunigungseinrichtung (606), zumindest eine Vereinigungseinrichtung, das Steuersystem, das Vermittlungssystem bzw. die Konfigurationseinrichtung (612) an dem Netz verbunden werden, um eine Erkennung als Knoten an dem Netz für jedes System bei anderen Knoten zu erlangen, und eine Bildverarbeitung in der Gesamtheit durch Kooperation mehrerer der Knoten durchgeführt wird.

35. Verfahren nach Anspruch 32,
**dadurch gekennzeichnet, dass** die zumindest eine Information bezüglich der Datenverarbeitungsfähigkeiten eine Rate, mit der die Bilddaten zu Frame-Bilddaten verarbeitet werden können, und/oder eine Anzahl von verfügbaren Frame-Puffern und/oder eine Frame-Bilddatenauflösung und/oder eine Angabe jeweiliger Betriebsmodi, die durch die Graphikprozessoren unterstützt werden, und/oder eine Anzahl von parallelen Pfaden, auf denen jeweilige Frame-Bilddaten für ein Vereinigen zu den kombinierten Frame-Bilddaten eingegeben werden können, und/oder eine Angabe jeweiliger Betriebsmodi, die durch die Vereinigungseinheiten (106) unterstützt werden, und/oder eine Speichergröße, die zum Speichern von zu übertragenden Daten zur Verfügung steht, und/oder eine Speicherzugriffsgeschwindigkeit und/oder einen Speicherdurchsatz umfasst.

36. Verfahren nach Anspruch 33,
**dadurch gekennzeichnet, dass** es ferner umfasst, dass die Zieladressen von im Wesentlichen allen der Verarbeitungssysteme, die auf die eine oder die mehreren Konfigurationsanforderungen reagierten, an jedes jener Verarbeitungssysteme übertragen werden.

37. Verfahren nach Anspruch 33,
**dadurch gekennzeichnet, dass** es ferner umfasst, dass die durch jedes Verarbeitungssystem in Ansprechen auf die eine oder die mehreren Konfigurationsanforderungen bereitgestellte Information und die Zieladressen für das Steuersystem, das dazu dient, die Anforderung zu steuern, übertragen werden.

38. Verfahren nach Anspruch 37,
**dadurch gekennzeichnet, dass** es ferner umfasst, dass eine oder mehrere Teilmengen von Verarbeitungssystemen aus den Verarbeitungssystemen ausgewählt werden, die auf die eine oder die mehreren Konfigurationsanforderungen reagierten, um an der Verarbeitung der Bilddaten teilzunehmen, um das Bild für eine Anzeige zu erzeugen, und zwar basierend auf ihren Reaktionen auf die eine oder die mehreren Konfigurationsanforderungen.

39. Verfahren nach Anspruch 32,
**dadurch gekennzeichnet, dass** es ferner umfasst, dass aus den mehreren Verarbeitungssystemen zumindest ein Video-Hub (352) ausgewählt wird, der dazu dient, (i) einen Frame der kombinierten Frame-Bilddaten und/oder zumindest einen extern bereitgestellten Frame von Frame-Bilddaten zu empfangen, (ii) den zumindest einen externen bereitgestellten Frame von Frame-Bilddaten und/oder den Frame der kombinierten Frame-Bilddaten an zumindest einen der Graphikprozessoren zu übertragen, sodass einer oder mehrere der nachfolgenden Frames von Frame-Bilddaten ein nächster Frame der kombinierten Frame-Bilddaten auf dem zumindest einen extern bereitgestellten Frame von Frame-Bilddaten und/oder dem Frame der kombinierten Frame-Bilddaten basieren kann.

40. Verfahren nach Anspruch 32,
**dadurch gekennzeichnet, dass** es ferner umfasst, dass aus den mehreren Verarbeitungsknoten zumindest ein Speicher-Hub ausgewählt wird, der dazu dient, (i) allgemeine Bilddaten zu empfangen und zu speichern, (ii) die allgemeinen Bilddaten an zumindest einen der Graphikprozessoren zu übertragen, sodass die nachfolgenden Frames von Frame-Bilddaten und/oder ein nachfolgender Frame der kombinierten Frame-Bilddaten zumindest einige der allgemeinen Bilddaten umfassen können.

41. Verfahren nach Anspruch 32,
**dadurch gekennzeichnet, dass** es ferner umfasst, dass eine Hierarchie unter der Teilmenge von Verarbeitungsknoten festgelegt wird, sodass;
die Teilmenge der Verarbeitungssysteme in mehrere Ebenen gestaffelt wird,
das Steuersystem ein Steuersystem der (n)-ten Ebene ist,
die zumindest eine Vereinigungseinrichtung eine Vereinigungseinrichtung der (n)-ten Ebene ist,
das Datenvermittlungssystem ein Datenvermittlungssystem der (n)-ten Ebene ist, und
zumindest eine Beschleunigungseinrichtung (606) eine Beschleunigungseinrichtung der (n)-ten Ebene ist, die ein Steuersystem der (n-1)-ten Ebene und mehrere Beschleunigungseinrichtungen der (n-1)-ten Ebene umfasst, die mittels eines Datenvermittlungssystems der (n-1)-ten Ebene miteinander gekoppelt sind.

42. Verfahren nach Anspruch 41,
**dadurch gekennzeichnet, dass** es ferner umfasst, dass Informationssätze der (n)-ten Ebene an eine oder mehrere der Teilmengen übertragen werden, die (i) Anweisungen enthalten und/oder (ii) verschiedene Daten enthalten, die bei der Erzeugung des Bilds verwendet werden.

43. Verfahren nach Anspruch 42,
**dadurch gekennzeichnet, dass** die Anweisungen eine Information umfassen, die bewirkt, dass die Graphikprozessoren, die lokalen Vereinigungseinheiten (106A - 106D) und die Kernvereinigungseinheit (106N) in einem oder mehreren Modi arbeiten, die zumindest eines der folgenden beeinflussen:
(i) Timing-Beziehungen zwischen dem Rendern von Bilddaten, dem Abrufen von Frame-Bilddaten von jeweiligen lokalen Frame-Puffern und dem Vereinigen von Frame-Bilddaten; und (ii) wie die Frame-Bilddaten vereinigt werden, um die kombinierten Frame-Bilddaten synchron zu erzeugen.

44. Verfahren nach Anspruch 42,
**dadurch gekennzeichnet, dass** die verschiedenen Daten, die bei der Erzeugung des Bilds verwendet werden, Texturdaten und/oder Videodaten und/oder einen extern bereitgestellten Frame von Frame-Bilddaten umfassen.

45. Verfahren nach Anspruch 42,
**dadurch gekennzeichnet, dass** jeder der Informationssätze der (n)-ten Ebene (i) einen Header der (n)-ten Ebene, der angibt, dass der gegebene Informationssatz von dem Steuersystem der (n)-ten Ebene ausgegeben wurde; (ii) mehrere Informationsblöcke der (n)-ten Ebene, die jeweils eine Information für eines oder mehrere der Systeme der (n)-ten Ebene umfassen, umfasst.

46. Verfahren nach Anspruch 45,
**dadurch gekennzeichnet, dass** zumindest einer der mehreren Informationsblöcke der (n)-ten Ebene eine Information für die Beschleunigungseinrichtung der (n)-ten Ebene umfasst, und wobei die mehreren Informationsblöcke der (n)-ten Ebene an die jeweiligen Systeme der (n)-ten Ebene weitergeleitet werden.

47. Verfahren nach Anspruch 46,
**dadurch gekennzeichnet, dass** der Informationsblock der (n)-ten Ebene für die Beschleunigungseinrichtung der (n)-ten Ebene mehrere jeweilige Informationssubblöcke der (n-1)-ten Ebene für die jeweiligen Systeme der (n-1)-ten Ebene umfasst, und
ferner umfassend, dass die mehreren Informationssubblöcke der (n-1)-ten Ebene an die jeweiligen Systeme der (n-1)-ten Ebene weitergeleitet werden.

## Revendications

1. Appareil pour traiter des données d'images et produire une image afin de couvrir une zone image d'un affichage, l'appareil incluant des sous-groupes d'une pluralité de systèmes de traitement couplés ensemble, l'appareil comprenant :
au moins un accélérateur (606) incluant une pluralité de groupes de processeurs graphiques, chaque processeur graphique (104) ayant pour fonction de restituer les données d'images dans des données d'images en trame et de stocker les données d'images en trame dans un tampon de trame locale respectif ;
un ou plusieurs dispositifs de fusionnement incluant une ou plusieurs unités de fusionnement (106), lesdites une ou plusieurs unités de fusionnement (106) incluant une ou plusieurs unités de fusionnement locales (106A-106D) et une unité de fusionnement centrale (106N),
une unité respective parmi les unités de fusionnement locales (106A-106D) étant associée à chaque groupe de processeurs graphiques et ayant pour fonction de recevoir de manière synchrone les données d'images de trame depuis les tampons de trame locaux respectifs, qui sont formés en combinant les données d'images de trame, et produire de manière synchrone des données d'images de trame combinées locales basées sur celles-ci, et l'unité de fusionnement centrale (106N) étant associée à chaque unité de fusionnement locale et
ayant pour fonction de recevoir de manière synchrone les données d'images de trame combinées locales depuis les unités de fusionnement locales respectives (106A-106D) et produire de manière synchrone les données d'images de trame combinées basées sur celles-ci ;
un système de commande incluant un processeur de commande (102) dont la fonction est de fournir des instructions à l'un des sous-groupes de systèmes de traitement, et dont la fonction est de sélectionner le sous-groupe de systèmes de traitement pour participer au traitement des données d'images et produire l'image pour l'affichage ; et
au moins un système de commutation par paquets (504) dont la fonction est de commuter des paquets de données entre l'un des sous-groupes et un autre sous-groupe, et dont la fonction est d'acheminer les données pour former au moins les données d'images de trame, les données d'images de trame formées, ou les données d'images de trame combinées ;
dans lequel l'unité de fusionnement centrale (106N) a pour fonction de produire un signal de synchronisation de fusionnement utilisé par l'un des processeurs graphiques pour libérer les données d'images de trame depuis les tampons de trames locaux respectifs vers les unités de fusionnement locales (106A-106D), dans lequel le signal de synchronisation de fusionnement est synchronisé en accord avec un protocole d'affichage définissant de quelle manière des trames respectives des données d'images de trame combinées doivent être affichées.

2. Appareil selon la revendication 1, **caractérisé en ce qu'**il comprend encore au moins un configurateur (612) dont la fonction est de faciliter la sélection du sous-groupe de systèmes de traitement.

3. Appareil selon la revendication 2, **caractérisé en ce que** les systèmes de traitement, au moins un accélérateur (606), au moins un dispositif de fusionnement, le système de commande, le système de commutation, et le configurateur (612), sont respectivement reconnus comme un noeud sur le réseau auquel il est connecté par les autres noeuds, et exécutant un traitement d'image, dans son ensemble, par coopération d'une pluralité de noeuds.

4. Appareil selon la revendication 2, **caractérisé en ce que** le configurateur (612) a pour fonction de délivrer une ou plusieurs requêtes de configuration à la pluralité de systèmes de traitement, lesdites une ou plusieurs requêtes de configuration invitant chaque système de traitement à transmettre au moins certaines informations concernant ses capacités de traitement de données et son adresse de destination au configurateur (612).

5. Appareil selon la revendication 4, **caractérisé en ce que** lesdites au moins certaines informations concernant les capacités de traitement de données incluent au moins un paramètre parmi une vitesse à laquelle les données d'images peuvent être traitées pour donner des données d'images de trame, un nombre de tampons de trame disponibles, la résolution des données d'images de trame, et une indication des modes de fonctionnement respectifs supportés par les processeurs graphiques, un nombre de trajets parallèles dans lesquels des données d'images de trame respectives peuvent être injectées pour le fusionnement et donner les données d'images de trame combinées, une indication des modes de fonctionnement respectifs supportés par les unités de fusionnement (106), la taille mémoire disponible pour stocker des données, la vitesse d'accès mémoire, et le débit de mémoire.

6. Appareil selon la revendication 4, **caractérisé en ce que** le configurateur (612) a en outre pour fonction de transmettre les adresses de destination de sensiblement tous les systèmes de traitement qui ont répondu à une ou plusieurs requêtes de configuration, vers chacun de la pluralité de systèmes de traitement.

7. Appareil selon la revendication 4, **caractérisé en ce que** le configurateur (612) a en outre pour fonction de transmettre les informations fournies par chaque système de traitement en réponse auxdites une ou plusieurs requêtes de configuration et les adresses de destination du système de commande qui reçoit lesdites une ou plusieurs requêtes de configuration.

8. Appareil selon la revendication 7, **caractérisé en ce que** l'un au moins de la pluralité de systèmes de commande a pour fonction de sélectionner un ou plusieurs sous-groupes parmi les systèmes de traitement qui ont répondu auxdites une ou plusieurs requêtes de configuration pour participer au traitement des données d'images et produire à l'image pour l'affichage en se basant sur leurs réponses auxdites une ou plusieurs requêtes de configuration.

9. Appareil selon la revendication 1, **caractérisé en ce qu'**il comprend en outre au moins au moins un concentrateur vidéo (352) dont la fonction est (i) de recevoir au moins une trame parmi une trame des données d'images de trame combinées et au moins une trame fournie de l'extérieur des données d'images de trame, (ii) de transmettre au moins une trame parmi ladite au moins une trame fournie de l'extérieur des données d'images de trame et la trame des données d'images de trame combinées vers un au moins des processeurs graphiques de telle façon qu'une ou plusieurs des trames successives des données d'images de trame d'une trame suivante des données d'images de trame combinées peu(ven)t être basée(s) sur ladite au moins une trame parmi ladite au moins une trame fournie de l'extérieur des données d'images de trame et la trame des données d'images de trame combinées.

10. Appareil selon la revendication 1, **caractérisé en ce que** le protocole d'affichage définit au moins une cadence de trames à laquelle des trames successives des données d'images de trame combinées sont affichées, et une période d'extinction qui impose quand les données d'images de trame combinées doivent être rafraîchies.

11. Appareil selon la revendication 1, **caractérisé en ce que** ladite trame fournie de l'extérieur des données d'images de trame adhère à l'un des protocoles d'affichage, et le signal de synchronisation de fusionnement est synchronisé en accord avec ce protocole d'affichage de telle façon que l'unité de fusionnement centrale (106N) a pour fonction de produire une trame ultérieure des données d'images de trame combinées en se basant sur ladite au moins une trame fournie de l'extérieur des données d'images de trame.

12. Appareil selon la revendication 9, **caractérisé en ce que** le noeud concentrateur de mémoire a pour fonction (i) de recevoir et de stocker des données d'images communes, (ii) de transmettre les données d'images communes à l'un au moins des processeurs graphiques de telle façon que l'une au moins des trames successives des données d'images de trame et une trame successive des données d'images de trame combinées va inclure au moins certaines des données d'images communes.

13. Appareil selon la revendication 12, **caractérisé en ce que** les données d'images communes incluent des données de texture.

14. Appareil selon la revendication 1, **caractérisé en ce que** au moins certains des accélérateurs (606) sont groupés pour former des groupes respectifs de processeurs graphiques ;
au moins certains des dispositifs de fusionnement incluent des unités de fusionnement locales respectives (106A-106D) associées aux groupes respectifs des processeurs graphiques de telle façon que les unités de fusionnement locales respectives (106A-106B) ont pour fonction de recevoir de manière synchrone les données d'images de trame depuis les tampons de trame locaux respectives, et produire de manière synchrone des données d'images de trame combinées locales en se basant sur celles-ci ; et
l'un au moins des systèmes de traitement inclut une unité de fusionnement centrale (106N) dont la fonction est de recevoir de manière synchrone des données d'images de trame combinées locales provenant des unités de fusionnement locales respectives (106A-106D) et de produire de manière synchrone les données d'images de trame combinées en se basant sur celles-ci.

15. Appareil selon la revendication 14, **caractérisé en ce qu'**un système de commande de niveau (n) a pour fonction de transmettre des groupes d'informations de niveau (n) en réseau à un ou plusieurs des sous-groupes de noeuds de traitement qui satisfont l'une au moins des conditions (i) contenir des instructions, et (ii) contenir diverses données utilisées pour la production de l'image.

16. Appareil selon la revendication 1, **caractérisé en ce que** l'unité de fusionnement centrale (106N) a pour fonction de produire un signal de synchronisation de fusionnement utilisé par certains au moins des groupes respectifs de processeurs graphiques afin de relâcher de manière synchrone les données d'images de trame depuis les tampons de trame locaux respectifs vers les unités de fusionnement locales respectives (106A-106D), et permettre aux unités de fusionnement locales respectives (106A-106D) de relâcher de manière synchrone les données d'images de trame combinées locales vers l'unité de fusionnement centrale (106N).

17. Appareil selon la revendication 16, **caractérisé en ce que** le signal de synchronisation de fusionnement est synchronisé en accord avec un protocole d'affichage définissant de quelle manière des trames respectives des données d'images de trame combinées doivent être affichées.

18. Appareil selon la revendication 16, **caractérisé en ce que** le protocole d'affichage définit au moins un paramètre parmi une cadence de trame à laquelle des trames successives des données d'images de trame combinées sont affichées, et une période d'extinction qui impose quand les données d'images de trame combinées doivent être rafraîchies.

19. Appareil selon la revendication 17, **caractérisé en ce que** le signal de synchronisation de fusionnement inclut des transitions qui sont à proximité des extrémités des périodes d'extinction de telle façon que ladite au moins une unité de fusionnement démarre la production des données d'images de trame combinées pour l'affichage à la fin de l'une au moins des périodes d'extinction.

20. Appareil selon la revendication 19, **caractérisé en ce que** les transitions du signal de synchronisation de fusionnement coïncident sensiblement avec les fins des périodes d'extinction.

21. Appareil selon la revendication 16, **caractérisé en ce que** chacun des processeurs graphiques a en outre pour fonction de restituer les données d'images dans un tampon de trame respectif parmi les tampons de trame de manière asynchrone par rapport au signal de synchronisation de fusionnement.

22. Appareil selon la revendication 1, **caractérisé en ce que** le processeur de commandes (102) a pour fonction de donner instruction à l'un des processeurs graphiques et auxdites une ou plusieurs unités de fusionnement (106) de fonctionner dans un ou plusieurs modes qui affectent un paramètre au moins parmi (i) des relations de temporisation entre le moment auquel des données image sont rendues, auquel les données d'images de trame sont relâchées depuis des tampons de trame locaux respectifs, et auquel des données d'images de trame sont fusionnées ; et (ii) de quelle manière les données d'images de trame sont fusionnées pour produire de manière synchrone les données d'images de trame combinées.

23. Appareil selon la revendication 22, **caractérisé en ce que** le processeur de commande (102) a pour fonction de donner instruction à l'un des processeurs graphiques et auxdites une ou plusieurs unités de fusionnement (106) de fonctionner dans lesdits un ou plusieurs modes sur une base trame par trame.

24. Appareil selon la revendication 22, **caractérisé en ce que** l'un au moins des modes prévoit que :
un ou plusieurs des processeurs graphiques termine(nt) le rendu des données d'images dans les tampons de trame respectifs avant la fin de la période d'extinction ;
un ou plusieurs des processeurs graphiques (104) termine(nt) le rendu des données d'images dans les tampons de trame respectifs avant la fin d'un nombre entier de périodes d'extinction ; et
un ou plusieurs des processeurs graphiques (104) inclut un nombre entier de tampons de trame locaux, et lesdits un ou plusieurs processeurs graphiques (104) termine(nt) le rendu des données d'images dans le nombre entier respectif de tampons d'images avant les fins d'un nombre entier correspondant de périodes d'extinction.

25. Appareil selon la revendication 22, **caractérisé en ce que** l'un au moins des modes est un mode de division de zone prévoyant qu'au moins deux des tampons de trame locaux sont cloisonnés en zones de rendu respectives qui correspondent à des portions respectives de la zone d'image et en zones de non-rendu, et une agrégation des zones de rendu a pour résultat une zone de rendu totale qui correspond à toutes les portions de la zone d'image.

26. Appareil selon la revendication 22, **caractérisé en ce que** l'un au moins des modes est un mode de moyennage prévoyant que les tampons de trame locaux d'au moins deux des processeurs graphiques (104) inclut les zones de rendu qui correspondent chacune à toutes les portions de la zone d'image, et **en ce que** les données d'images de trame respectives provenant desdits au moins deux tampons de trame locaux sont moyennées pour produire les données d'images de trame combinées.

27. Appareil selon la revendication 22, **caractérisé en ce que** l'un au moins des modes est un mode de mélange de couches prévoyant que :
(i) certaines au moins des données d'images sont rendues dans les tampons de trame locaux d'au moins deux des processeurs graphiques de telle façon que chacun de ces tampons de trame locaux inclut des données d'images de trame représentant une portion des données d'images de trame combinées ; (ii) chacune des portions des données d'images de trame combinées sont affectées avec une priorité ; et (iii) lesdites une ou plusieurs unités de fusionnement (106) ont en outre pour fonction de produire de manière synchrone les données d'images de trame combinées en disposant en couches chacune des données d'images de trame dans un ordre selon leurs priorités.

28. Appareil selon la revendication 22, **caractérisé en ce que** l'un au moins des modes est un mode de tri en Z et de mélange de couches prévoyant que (i) certaines au moins des données d'images sont rendues dans les tampons de trame locaux d'au moins deux des processeurs graphiques de telle façon que chacun desdits au moins deux tampons de trame locaux inclut des données d'images de trame représentant une portion des données d'images de trame combinées ; (ii) les données d'images de trame incluent des valeurs Z représentant une profondeur de l'image ; et (iii) lesdites une ou plusieurs unités de fusionnement (106) ont en outre pour fonction de produire de manière synchrone les données d'images de trame combinées par un tri en Z et une disposition en couches de chacune des données d'images de trame suivant la profondeur d'image.

29. Appareil selon la revendication 22, **caractérisé en ce que** l'un au moins des modes est un mode d'animation "basculant" (flip) prévoyant que (i) les tampons de trame locaux d'au moins deux processeurs graphiques incluent des données d'images de trame qui sont capables de couvrir la zone d'image ; et (ii) lesdites une ou plusieurs unités de fusionnement (106) ont en outre pour fonction de produire les données d'images de trame combinées en relâchant en séquence les données d'images de trame respectives depuis lesdits au moins deux processeurs graphiques.

30. Appareil selon la revendication 1, **caractérisé en ce qu'**il comprend en outre au moins un concentrateur vidéo (352) dont la fonction est de recevoir au moins une trame parmi une trame des données d'images de trame combinées et au moins une trame fournie de l'extérieur des données d'images de trame, le concentrateur vidéo (352) étant fonctionnellement couplé à chacun de la pluralité de processeurs graphiques de telle façon que (i) l'une au moins des trames successives des données d'images de trame provenant d'un ou plusieurs des processeurs graphiques peut inclure au moins une trame parmi ladite au moins une trame fournie de l'extérieur des données d'images de trame et la trame des données d'images de trame combinées, et (ii) une ou plusieurs unités de fusionnement (106) ont pour fonction de produire une trame successive des données d'images de trame combinées en se basant sur ladite au moins une trame parmi ladite au moins une trame fournie de l'extérieur des données d'images de trame et la trame des données d'images de trame combinées.

31. Appareil selon la revendication 1, **caractérisé en ce qu'**il comprend en outre au moins un concentrateur mémoire dont la fonction est de recevoir et de stocker des données d'images communes, ledit au moins un concentrateur mémoire étant fonctionnellement couplé à la pluralité de processeurs graphiques de telle façon que (i) l'une au moins des trames successives des données d'images de trame provenant d'un ou plusieurs des processeurs graphiques peut inclure certaines au moins des données d'images communes, et (ii) lesdites une ou plusieurs unités de fusionnement (106) ont pour fonction de produire une trame successive des données d'images de trame combinées en se basant sur les données d'images communes.

32. Procédé pour traiter des données d'images et produire une image afin de couvrir une zone d'image d'un affichage, le procédé étant mis en oeuvre en utilisant des sous-groupes d'une pluralité de systèmes de traitement couplés ensemble, le procédé comprenant les étapes consistant à :
sélectionner parmi la pluralité de systèmes de traitement au moins un accélérateur (606) incluant une pluralité de groupes de processeurs graphiques, chaque processeur graphique (104) ayant pour fonction de rendre les données d'images dans des données d'images de trame et de stocker les données d'images de trame dans un tampon de trame local respectif ;
sélectionner parmi la pluralité de systèmes de traitement une pluralité de dispositifs de fusionnement locaux incluant une ou plusieurs unités de fusionnement locales (106A-106D), lesdites une ou plusieurs unités de fusionnement (106) ayant pour fonction de lire de manière synchrone les données d'images de trame depuis les tampons de trame locaux respectif, et de produire de manière synchrone des données d'images de trame combinées en se basant sur celles-ci,
sélectionner parmi la pluralité de systèmes de traitement un ou
plusieurs dispositifs de fusionnement centraux incluant une unité de fusionnement centrale (106N) ayant pour fonction de recevoir de manière synchrone les données d'images de trame combinées locales et
produire de manière synchrone les données d'images de trame combinées en se basant sur celles-ci ;
établir un système de commande incluant un processeur de commande (102) dont la fonction est de fournir des instructions aux sous-groupes des autres systèmes de traitement et ayant pour fonction de sélectionner le second groupe pour participer au traitement des données d'images pour produire l'image pour son affichage ; et
employer un système de commutation de données dont la fonction est de former des groupes de données en regroupant des données parmi les données d'images, les données d'images de trame, et les données d'images de trame combinées, pour permettre la commutation des données de groupe parmi les sous-groupes,
dans lequel l'unité de fusionnement centrale (106N) a pour fonction de produire un signal de synchronisation de fusionnement utilisé par l'un des processeurs graphiques pour relâcher les données d'images de trame depuis les tampons de trame locaux respectifs vers les unités de fusionnement locales (106A-106D), dans lequel le signal de synchronisation de fusionnement est synchronisé en accord avec un protocole d'affichage définissant de quelle manière des trames respectives des données d'images de trame combinées doivent être affichées.

33. Procédé selon la revendication 32, **caractérisé en ce qu'**il comprend encore de délivrer une ou plusieurs requêtes de configuration vers la pluralité de systèmes de traitement,
lesdites une ou plusieurs requêtes de configuration invitant chaque système de traitement à transmettre au moins certaines informations concernant sa capacité de traitement de données et son adresse de destination vers le configurateur qui exécute la configuration des données.

34. Procédé selon la revendication 32, **caractérisé en ce qu'**il comprend encore de connecter les systèmes de traitement, au moins un accélérateur (606), au moins un dispositif de fusionnement, le système de commande, le système de commutation, et le configurateur (612) respectivement sur le réseau de manière à obtenir la reconnaissance à titre de noeud sur le réseau pour chaque système dans d'autres noeuds, et d'exécuter un traitement d'image, dans son ensemble, par coopération d'une pluralité de noeuds.

35. Procédé selon la revendication 32, **caractérisé en ce que** lesdites informations concernant les capacités de traitement de données incluent au moins un paramètre parmi la cadence à laquelle les données d'images peuvent être traitées pour donner des données d'images de trame, un nombre de tampons de trame disponibles, une résolution des données d'images de trame, une indication des modes respectifs de fonctionnement supportés par les processeurs graphiques, un nombre de trajets parallèles dans lesquels des données d'images de trame respectives peuvent être injectées pour leur fusionnement dans les données d'images de trame combinées, une indication des modes respectifs de fonctionnement supportés par les unités de fusionnement (106), la taille mémoire disponible pour stocker des données à transmettre, une vitesse d'accès mémoire, et un débit de mémoire.

36. Procédé selon la revendication 33, **caractérisé en ce qu'**il comprend encore la transmission des adresses de destination sensiblement de tous les systèmes de traitement qui ont répondu auxdites une ou plusieurs requêtes de configuration vers chacun de ces systèmes de traitement.

37. Procédé selon la revendication 33, **caractérisé en ce qu'**il comprend encore la transmission des informations fournies par chaque système de traitement en réponse auxdites une ou plusieurs requêtes de configuration et les adresses de destination pour le système de commande capable de fonctionner pour commander la requête.

38. Procédé selon la revendication 37, **caractérisé en ce qu'**il comprend encore la sélection d'un ou plusieurs sous-groupes de systèmes de traitement parmi les systèmes de traitement qui ont répondu auxdites une ou plusieurs requêtes de configuration pour participer au traitement des données d'images afin de produire l'image à afficher en se basant sur leurs réponses auxdites une ou plusieurs requêtes de configuration.

39. Procédé selon la revendication 32, **caractérisé en ce qu'**il comprend en outre la sélection parmi la pluralité de systèmes de traitement d'au moins un concentrateur vidéo (352) ayant pour fonction de (i) recevoir au moins une trame parmi une trame des données d'images de trame combinées et au moins une trame fournie de l'extérieur des données d'images de trame, (ii) transmettre au moins une trame parmi ladite au moins une trame fournie de l'extérieur des données d'images de trame et la trame des données d'images de trame combinées vers au moins un des processeurs graphiques de telle façon qu'une ou plusieurs des trames successives des données d'images de trame dans une trame suivante des données d'images de trame combinées pourra être basée sur ladite au moins une trame parmi ladite au moins une trame fournie de l'extérieur des données de trame d'images et la trame des données d'images de trame combinées.

40. Procédé selon la revendication 32, **caractérisé en ce qu'**il comprend encore la sélection parmi la pluralité de noeuds de traitement d'au moins un concentrateur mémoire dont la fonction est (i) de recevoir et de stocker des données d'images communes, (ii) de transmettre les données d'images communes à l'un au moins des processeurs graphiques de telle façon qu'une trame au moins des trames successives des données d'images de trame et une trame successive des données d'images de trame combinées peut inclure certaines au moins des données d'images communes.

41. Procédé selon la revendication 32, **caractérisé en ce qu'**il comprend encore d'établir une hiérarchie parmi le sous-groupe de noeuds de traitement, de telle façon que :
le sous-groupe de systèmes de traitement sont hiérarchisés en une pluralité de niveaux,
le système de commande est un système de commande de niveau (n),
ledit au moins un dispositif de fusionnement est un dispositif de fusionnement de niveau (n), et
au moins un accélérateur (606) est un accélérateur de niveau (n) qui inclut un système de commande de niveau (n - 1), et une pluralité d'accélérateurs de niveau (n - 1) couplés ensemble au moyen d'un système de commutation de données de niveau (n - 1).

42. Procédé selon la revendication 41, **caractérisé en ce qu'**il comprend encore la transmission de groupes d'informations de niveau (n) à un ou plusieurs sous-groupes qui satisfait l'une au moins des conditions suivantes (i) il contient des instructions, et (ii) il contient diverses données utilisées pour la production de l'image.

43. Procédé selon la revendication 42, **caractérisé en ce que** les instructions incluent des informations qui amènent les processeurs graphiques, les unités de fusionnement locales (106A-106D), et l'unité de fusionnement centrale (106N) à fonctionner dans un ou plusieurs modes qui affectent un paramètre au moins parmi (i) des relations temporelles entre le moment auquel des données d'images sont rendues, l'instant auquel des données d'images de trame sont relâchées depuis des tampons de trame locaux respectifs, et quand des données d'images de trame sont en cours de fusionnement ; et (ii) de quelle manière les données d'images de trame sont fusionnées pour produire de manière synchrone les données d'images de trame combinées.

44. Procédé selon la revendication 42, **caractérisé en ce que** les diverses données utilisées pour la production de l'image incluent des données choisies parmi des données de texture, des données vidéo, et des données d'images de trame d'une trame fournie de l'extérieur.

45. Procédé selon la revendication 42, **caractérisé en ce que** chacun des groupes d'informations de niveau (n) inclut (i) un en-tête de niveau (n) indiquant que le groupe d'informations donné a été délivré par le système de commande de niveau (n) ; (ii) une pluralité de blocs d'information de niveau (n), chacun incluant des informations pour un ou plusieurs des systèmes de niveau (n).

46. Procédé selon la revendication 45, **caractérisé en ce que** l'un au moins de la pluralité de blocs d'information de niveau (n) inclut des informations pour l'accélérateur de niveau (n), et l'acheminement de la pluralité de blocs d'information de niveau (n) vers les systèmes de niveau (n) respectifs.

47. Procédé selon la revendication 46, **caractérisé en ce que** le bloc d'information de niveau (n) pour l'accélérateur de niveau (n) inclut une pluralité de sous-blocs d'information respectifs (n - 1) pour le système (n - 1) respectif, et
comprenant en outre d'acheminer la pluralité de sous-bloc d'information de niveau (n - 1) vers les systèmes de niveau (n - 1) respectifs.
